# EUROPEAN PATENT APPLICATION

(11) **EP 1 482 484 A2**
(43) Date of publication of application: **01.12.2004**
(21) Application number: 04012531.2
(22) Date of filing: 27.05.2004
(51) Int. Cl.: G11B 5/54, G11B 5/48

(54) **Magnetic head lifting and lowering device**

(30) Priority: 28.05.2003 JP 2003150632; 06.01.2004 JP 2004000947
(71) Applicant: MATSUSHITA ELECTRIC INDUSTRIAL CO., LTD., Kadoma-shi, Osaka 571-8501 (JP)
(72) Inventor: Murakami, Yutaka, Hirakata-shi Osaka 573-0163 (JP); Tomita, Hironori, Ikoma-shi Nara 630-0141 (JP)
(74) Representative: Stippl, Hubert, Dipl.-Ing.

(57) **Abstract**

It is an object of the present invention to provide a magnetic head lifting and lowering device that allows a thin magneto-optical disk recording and reproducing device to be provided. A magnetic head lifting and lowering device is provided with a fastening plate, a magnetic head having a first position at which information is recorded and which is near or in contact with the information recording medium and a second position that is away from the information recording medium, a support member including an attachment portion to which the magnetic head element is attached, a fastened portion fastened to the fastening plate, and a leaf spring portion oblique to the fastening plate between the attachment portion and the fastened portion position, and a lifter. The lifter includes a connected sliding member that is connected to the fastening plate in such a manner that it is capable of sliding in a direction linking the attachment portion and the fastened portion of the support member. The connected sliding member has a lifting and lowering portion disposed on the leaf spring portion side of the fastening plate. The lifting and lowering portion, when the magnetic head element is in the first position, is disposed away from the leaf spring portion on the side of the leaf spring portion that is opposite the magnetic head side.

## Description

The present invention relates to magnetic head lifting and lowering devices, and in particular relates to magnetic head lifting and lowering devices provided in magneto-optical disk recording and reproducing devices.

Magneto-optical disk recording and reproducing devices are provided with an optical head for irradiating a focused light beam on the magneto-optical recording layer on one surface side of a magneto-optical disk that is revolved by a revolution actuating mechanism, and a magnetic head that is disposed in opposition to the optical head and applies an external magnetic field to the magneto-optical recording layer on the other surface side of the magneto-optical disk.

The magnetic head applies to the magneto-optical recording layer a magnetic field whose orientation is modulated according to the information signal to be recorded. A portion of the magneto-optical recording layer that has been heated to above its Curie temperature due to light beam irradiation and thereby losing its coercivity is magnetized according to the direction of the magnetic field that is applied from the magnetic head. Then, the portion of the magneto-optical recording layer that has been heated to above its Curie temperature drops to below the Curie temperature as a result of the relative movement of the light beam as the magneto-optical disk is revolved and the direction of the magnetization becomes fixed, thereby recording the information signal.

Axial runout occurs easily when the magneto-optical disk is revolved. For this reason, the magnetic head is attached to a tip of a support member that can be rocked in the direction of axial runout of the magneto-optical disk. This magnetic head comes into sliding contact with the magneto-optical disk, or is placed on a slider that floats to maintain a very short distance between it and the magneto-optical disk.

Magneto-optical disks, a representative example of which are minidisks (hereinafter, also referred to as "MDs"), ordinarily are accommodated in a cartridge. Magneto-optical disk recording and reproducing devices are provided with a magnetic head lifting and lowering device that includes a cartridge holder for holding the cartridge, a lifting and lowering member for bringing the magnetic head into contact with and moving it away from the magneto-optical disk, and a lifting and lowering drive portion for driving the lifting and lowering member.

For example, Japanese Patent 3,366,446 and JP 2000-851116A disclose conventional magnetic head lifting and lowering devices.

A conventional magnetic head lifting and lowering device 90 is described below using FIGS. 26 to 35B. FIG. 26 is a perspective view of the conventional magnetic head lifting and lowering device 90. FIG. 27 is a lateral view of the magnetic head lifting and lowering device 90, and FIG. 28 is a lateral cross sectional view of the magnetic head lifting and lowering device 90 when a magneto-optical disk has not yet been mounted. FIG. 29 is a lateral cross sectional view of the magnetic head lifting and lowering device 90 when a magneto-optical disk has been mounted, and FIG. 30 is a lateral cross sectional view of the magnetic head lifting and lowering device 90 when recording to the magneto-optical disk.

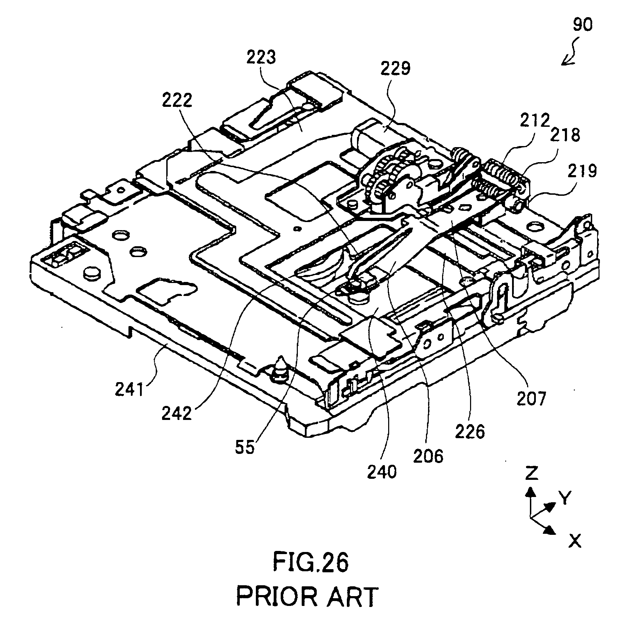

In FIGS. 26 to 30, a fastening plate 207 for fastening a magnetic head unit 55 is provided to pivot via a shaft 218 on a joining member 219 for fastening an optical head 15. The fastening plate 207 is supported on a base 241 such that it can move as a single unit with the joining member 219 in the radial direction (X direction) of a magneto-optical disk 16 that is accommodated in a cartridge 17 that is mounted. The fastening plate 207 is urged by a spring 212 toward the magneto-optical disk 16 that is mounted.

The base 241 is provided with a spindle motor 242 that rotates the magneto-optical disk 16. A cartridge holder 223 is attached to the joining member 219 so as to pivot via a shaft 220 to the side of the base 241 on which the magneto-optical disk 16 is mounted. The cartridge holder 223 is provided with a lifting and lowering drive portion 229 having a DC motor and a gear box, and a lift mechanism 226. The lift mechanism 226 is driven by the lifting and lowering drive portion 229, and is rotated with respect to the cartridge holder 223.

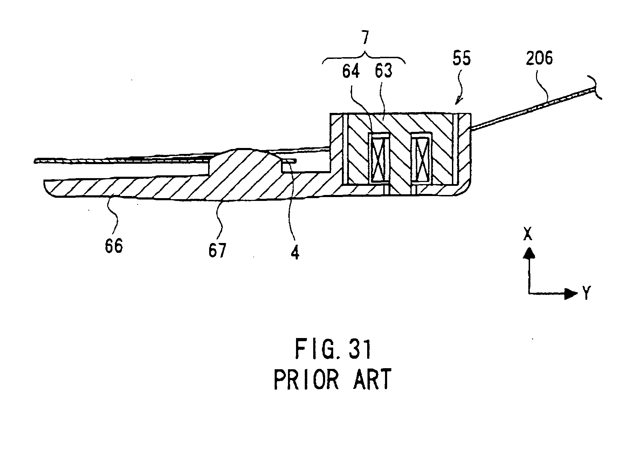

FIG. 31 is a lateral cross sectional view showing the configuration of the magnetic head unit 55. The magnetic head unit 55 includes a magnetic head element 7 and a sliding member 66 that supports the magnetic head element 7. The sliding member 66 is made of a resin with good slidability such as polyphenylene sulfide or a liquid-crystal polymer, and has a sliding surface 67 that slides over the surface of the magneto-optical disk 16. The magnetic head element 7 has an E-shaped magnetic core 63 made of a soft magnetic material such as ferrite, and a coil 64 wrapped around the central magnetic pole of the magnetic core 63, and is formed attached to the sliding member 66 in a single unit therewith by fixedly adhering it thereto or molding it into a single resin unit therewith.

The sliding member 66 of the magnetic head unit 55 is attached to an attachment portion 4 of a leaf spring portion 206 formed in the fastening plate 207. The leaf spring portion 206 is made of a thin plate spring material such as stainless steel or phosphor bronze, and pushes the sliding surface 67 of the sliding member 66 toward the surface of the magneto-optical disk 16.

The fastening plate 207 has an arm portion 222 extending in the magnetic head unit 55 side (negative Y axis direction). The tip of the arm portion 222 is disposed above the magnetic head unit 55 and extends in the X direction, and regulates the position of the magnetic head unit 55 in the Z axis direction.

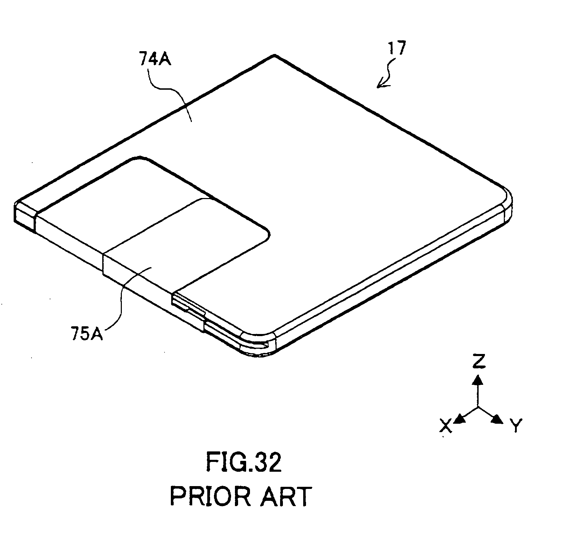

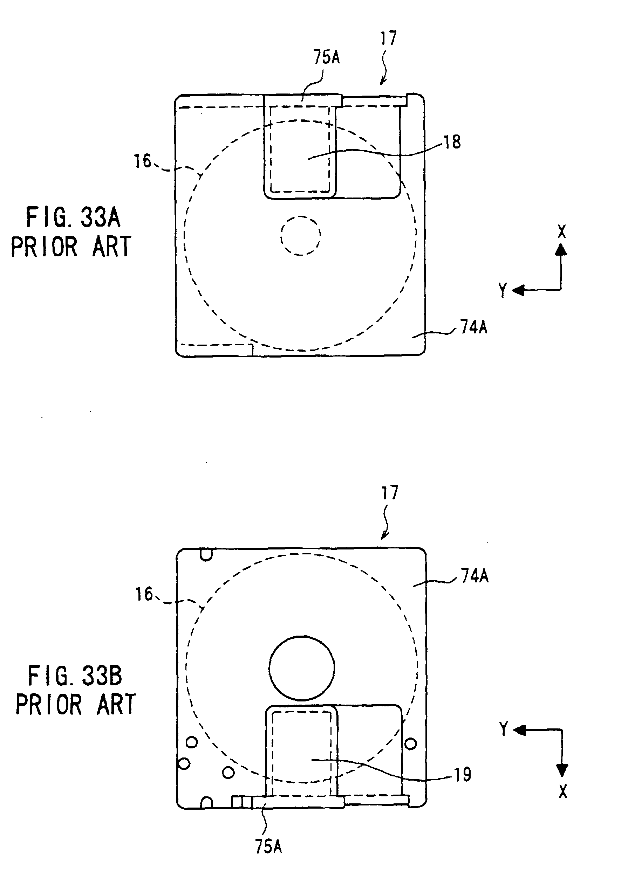

FIG. 32 is a perspective view of the cartridge 17 of a conventional read-write magneto-optical disk, and FIG. 33A and FIG. 33B are upper and lower surface views of the cartridge 17.

The read-write cartridge 17 accommodates the magneto-optical disk 16. The read-write cartridge 17 has a main cartridge unit 74A made of a resin such as ABS or polycarbonate, and a shutter 75A made of a metal such as iron or stainless steel and configured such that it can be opened and closed. The read-write cartridge 17 has a magnetic head opening 18 formed in its upper surface into which the magnetic head unit 55 enters, and an optical head opening 19 formed in its lower surface through which passes the laser light from the optical head 15 that is irradiated onto the magneto-optical disk 16.

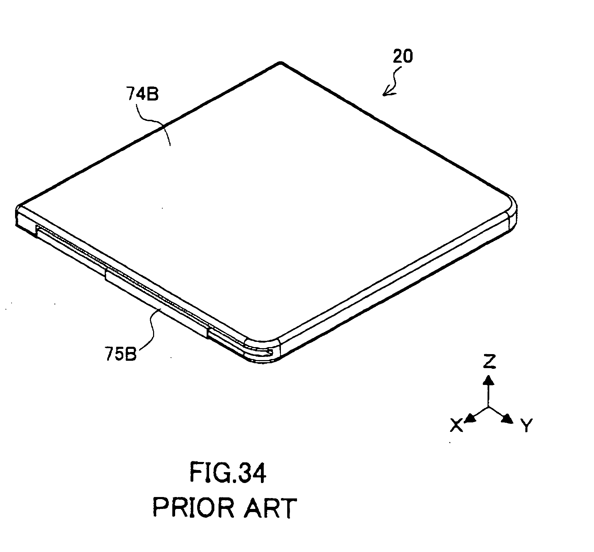

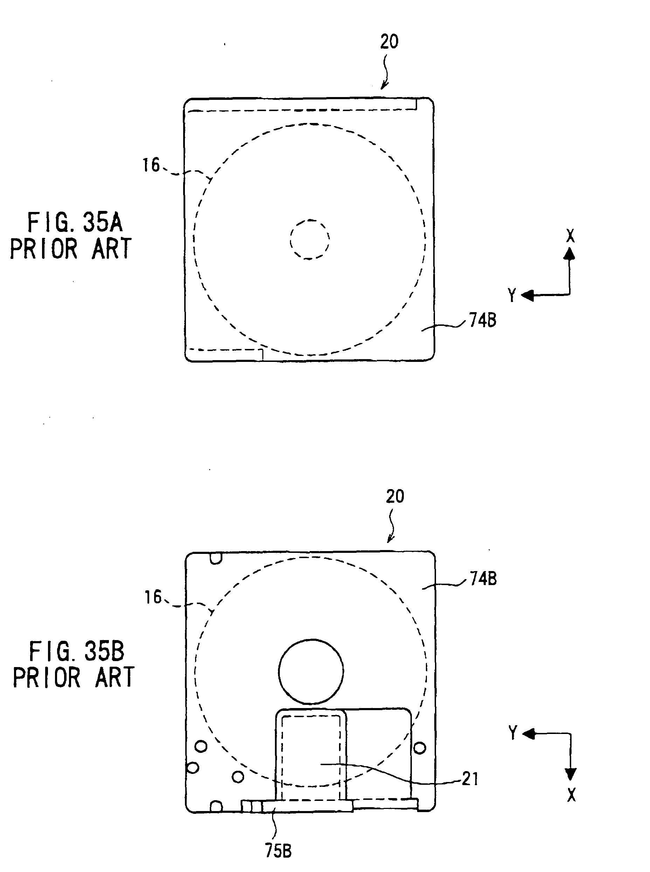

FIG. 34 is a perspective view of a cartridge 20 of a conventional read-only magneto-optical disk, and FIG. 35A and FIG. 35B are upper and lower surface views of the cartridge 20. The read-only cartridge 20 accommodates the magneto-optical disk 16. The read-only cartridge 20 has a main cartridge unit 74B made of a resin such as ABS or polycarbonate, and a shutter 75B made of a metal such as iron or stainless steel and configured such that it can be opened and closed. The read-only cartridge 20 has an optical head opening 21 formed in its lower surface in opposition to the optical head 15 and through which passes the laser light from the optical head 15 that is irradiated onto the magneto-optical disk 16.

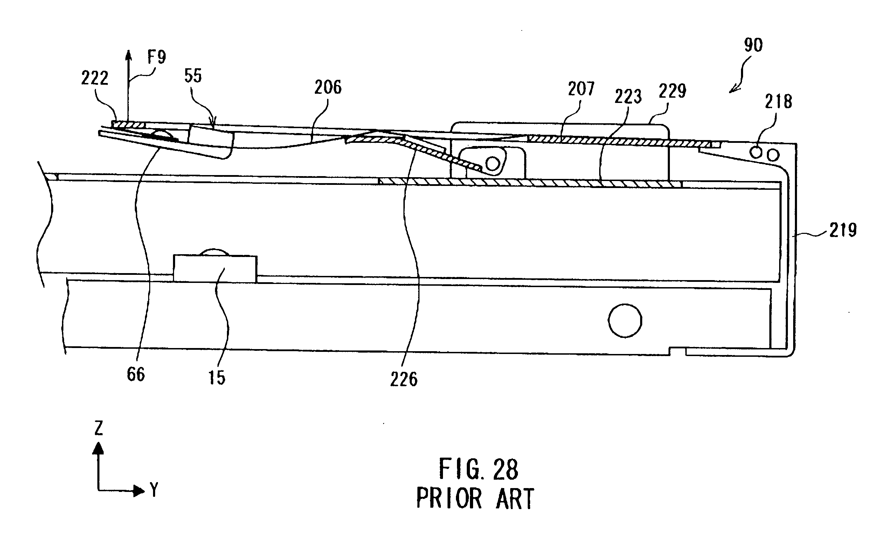

As shown in FIG. 28, when the read-write cartridge 17 is not mounted to the magnetic head lifting and lowering device, the lift mechanism 226 provided in the cartridge holder 223 presses up the leaf spring portion 206 in a manner slanted with respect to the surface of the cartridge holder 223, lifting the magnetic head unit 55 up from the cartridge holder 223.

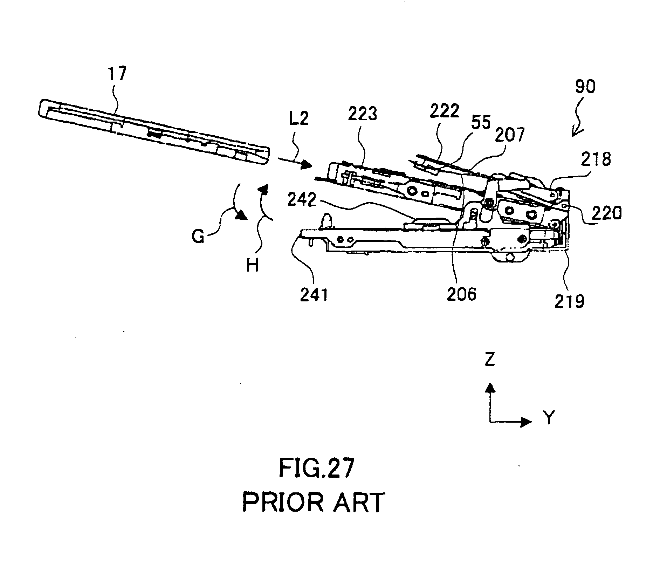

As shown in FIG. 27, when mounting the read-write cartridge 17, the cartridge holder 223 is tilted rotated in the direction of the arrow H with respect to the base 241. Since the lift mechanism 226 is slanted due to it rotating together with the cartridge holder 223 as a single unit, it pushes up the leaf spring portion 206, keeping the magnetic head unit 55 lifted up from the cartridge holder 223.

When the read-write cartridge 17 is inserted into the cartridge holder 223 in the direction of the arrow L2 in this state, the shutter 75A of the read-write cartridge 17 abuts against a portion of the cartridge holder 223. When the read-write cartridge 17 is further inserted into the cartridge holder 223 in this state, the shutter 75A slides with respect to the main cartridge unit 74A, exposing the magnetic head opening 18 and the optical head opening 19 of the read-write cartridge 17. It should be noted that if the read-only cartridge 20 has been inserted then only the optical head opening 21 is exposed.

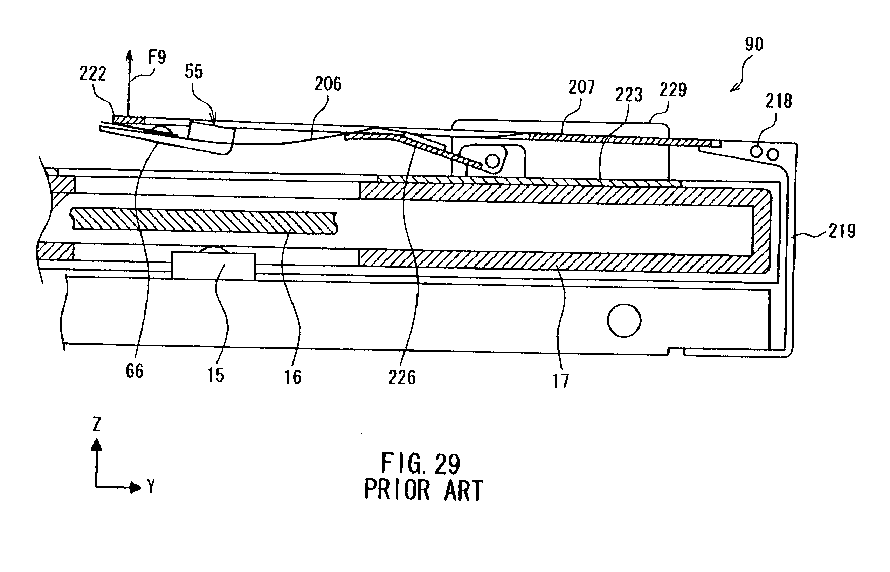

The cartridge holder 223 is then rotated in the direction of the arrow G of FIG. 27 until it is parallel to the base 241 and the magneto-optical disk 16 accommodated in the read-write cartridge 17 held by the cartridge holder 223 is mounted onto the spindle motor 242, putting the magneto-optical disk 16 in opposition to the optical head 15 as shown in FIG. 29.

When recording information to the magneto-optical disk 16 accommodated in the read-write cartridge 17, the DC motor and gears of the lifting and lowering drive portion 229 are driven so that the lift mechanism 226 is rotated toward the magneto-optical disk 16. By doing this, the leaf spring portion 206 that has been pushed up by the lift mechanism 226 is lowered.

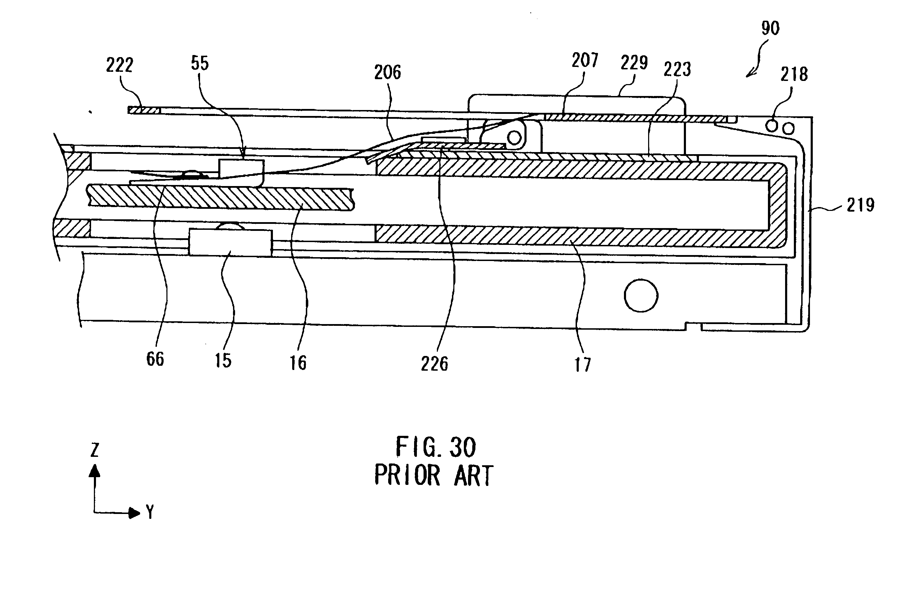

As shown in FIG. 30, when the lift mechanism 226 is rotated further to move it away from the leaf spring portion 206, the magnetic head unit 55 attached to the leaf spring portion 206 is brought into contact with the magneto-optical disk 16 and is pushed toward the magneto-optical disk 16 by the leaf spring portion 206, and follows the axial runout of the revolving magneto-optical disk 16.

With the above configuration of a conventional magnetic head lifting and lowering device 90, however, in FIG. 28 and FIG. 29 the tip of the leaf spring portion 206 that is pushed up by the lift mechanism 226 pushes up the arm portion 222 of the tip of the fastening plate 207. Thus, there is the problem that a force F9 is applied in the Z-axis direction to the arm portion 222 of the fastening plate 207 from the tip of the leaf spring portion 206, bending the fastening plate 207 and lifting up the arm portion 222 at its tip. It was therefore difficult to provide a thin profile magnetic head lifting and lowering device.

Also, it is necessary to provide the lift mechanism 226, which is rotated in order to raise and lower the magnetic head unit 55, and the lifting and lowering drive portion 229, which is constituted by a DC motor and gears and which drives the lift mechanism 226, in the cartridge holder 223. It was therefore difficult to provide a thin profile magnetic head lifting and lowering device.

Consequently, there was the problem that it was difficult to provide a thin profile magneto-optical disk recording and reproducing device provided with the magnetic head lifting and lowering device.

Moreover, when attaching and detaching the cartridge, it is necessary to secure a gap between the cartridge holder 223 and the joining member 219 in order to keep the cartridge holder 223, which is pivoted about the shaft 220, and the joining member 219 from coming into contact with one another. Thus, it was difficult to reduce the size of the magnetic head lifting and lowering device in the Y axis direction.

A first object of the present invention is to provide a magnetic head lifting and lowering device that can be made thin.

A second object of the present invention is to provide a magnetic head lifting and lowering device that can be made compact.

A first magnetic head lifting and lowering device according to the present invention is provided with a fastening plate, which is provided such that it is parallel to a surface of a disk-shaped information recording medium and which is in opposition to the disk-shaped information recording medium, a magnetic head having a first position at which information is recorded and which is near or in contact with the information recording medium and a second position that is away from the information recording medium, a support member including an attachment portion to which the magnetic head is attached, a fastened portion fastened to the information recording medium side of the fastening plate, and a leaf spring portion formed in a direction oblique to the fastening plate between the attachment portion and the fastened portion when the magnetic head is in the first position, and a lifter for lifting and lowering the magnetic head between the first position and the second position. The lifter includes a connected sliding member that is connected to the fastening plate in such a manner that it is capable of sliding in a direction linking the attachment portion and the fastened portion of the support member when viewed from the direction perpendicular to the fastening plate, the connected sliding member has a lifting and lowering portion disposed on the leaf spring portion side of the fastening plate. The lifting and lowering portion, when the magnetic head is in the first position, is disposed away from the leaf spring portion on the side of the leaf spring portion that is opposite the magnetic head side.

A second magnetic head lifting and lowering device of the present invention is provided with a cartridge holder rotatively connected to a fastening member and into which a cartridge accommodating a disk-shaped information recording medium is inserted, a fastening plate, which is provided such that it is parallel to a surface of the information recording medium, and which is in opposition to the information recording medium and connected to a joining member in such a manner that it can rotate in cooperation with rotation of the cartridge holder, a magnetic head for applying a magnetic field to the information recording medium, and a support member fastened to the fastening plate and supporting the magnetic head. A center of rotation of the cartridge holder matches a center of rotation of the fastening plate.

A third magnetic head lifting and lowering device of the present invention is provided with a cartridge holder into which a cartridge accommodating a disk-shaped information recording medium is inserted, a fastening plate, which is provided such that it is parallel to a surface of the information recording medium, and which is in opposition to the information recording medium, a magnetic head for applying a magnetic field to the information recording medium, a support member including an attachment portion to which the magnetic head is attached, a fastened portion fastened to the cartridge holder side of the fastening plate, and a leaf spring portion formed between the attachment portion and the fastened portion, and a lifter that raises and lowers the magnetic head with respect to the information recording medium. The attachment portion and the fastened portion of the support member are disposed in that order in the insertion direction of the cartridge when the cartridge is inserted into the cartridge holder. The lifter has a lifting and lowering portion disposed on the leaf spring portion side of the fastening plate. The lifter, when the cartridge is inserted, is slid in the direction of insertion of the cartridge, and the lifting and lowering portion is disposed at a position where it pushes up the magnetic head toward the fastening plate when the cartridge has not been inserted.

With the present invention, it is possible to provide a magnetic head lifting and lowering device that can be made thin.

Further, with the present invention, it is possible to provide a magnetic head lifting and lowering device that can be made compact.

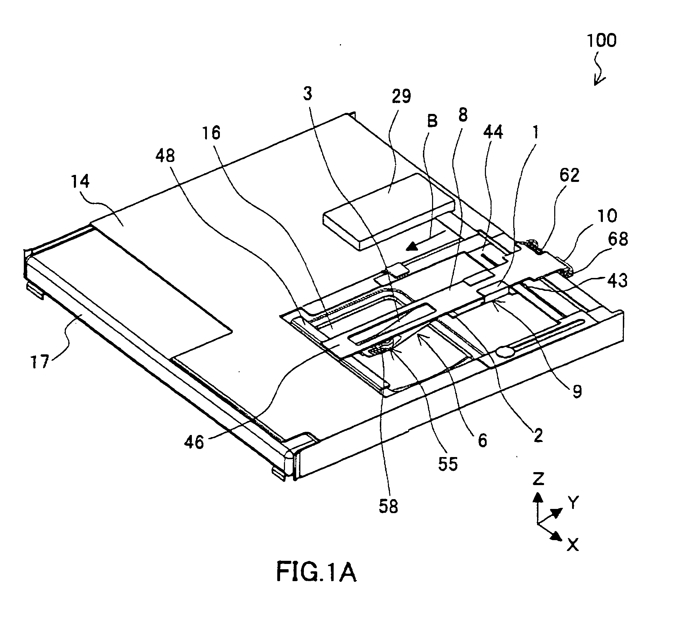

FIG. 1A is perspective view of the magnetic head lifting and lowering device of the first embodiment.

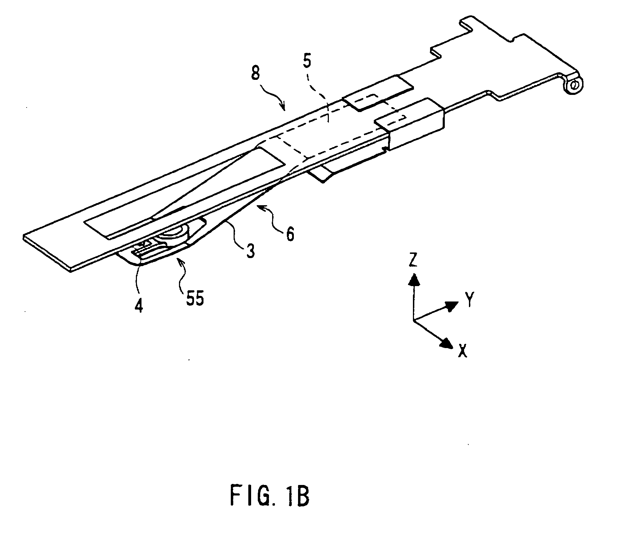

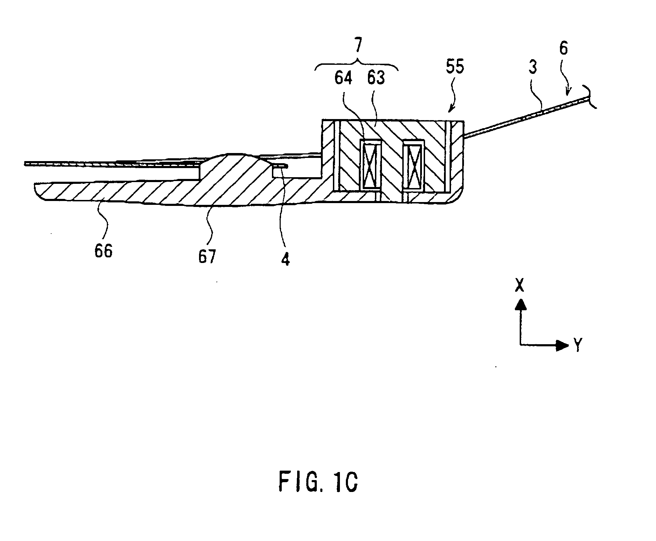

FIG. 1B is a perspective view showing a fastening plate and the structural elements attached thereto of the magnetic head lifting and lowering device of the first embodiment.
FIG. 1C is a cross sectional diagram of the magnetic head unit attached to a leaf spring portion of the magnetic head lifting and lowering device of the first embodiment.

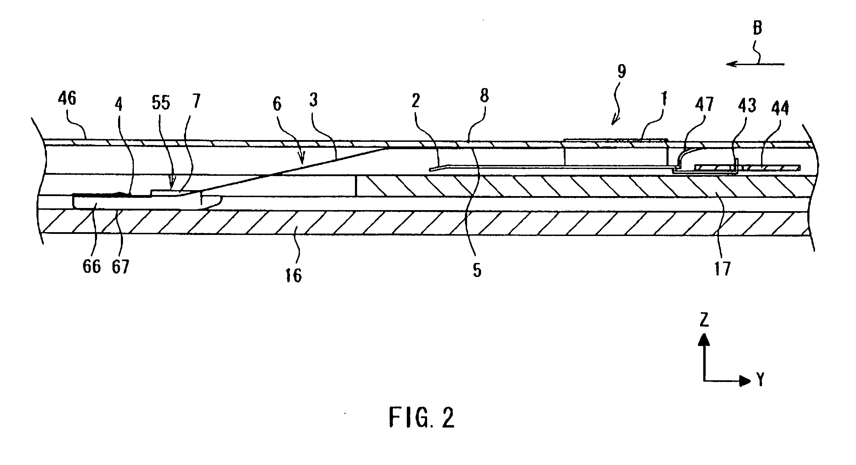

FIG. 2 is a lateral cross sectional view of the magnetic head lifting and lowering device of the first embodiment when the magnetic head element is in a first position for recording or reproducing information and which is near or in contact with a magneto-optical device.

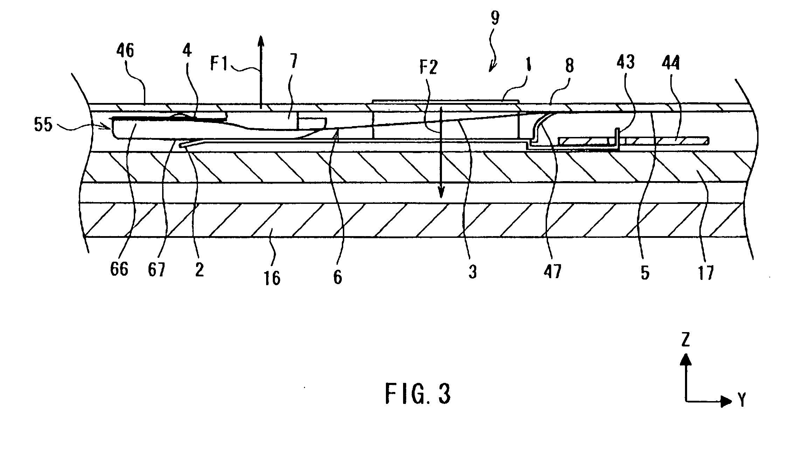

FIG. 3 is a lateral cross sectional view of when the magnetic head element of the first embodiment is in a second position that is away from the magneto-optical disk.

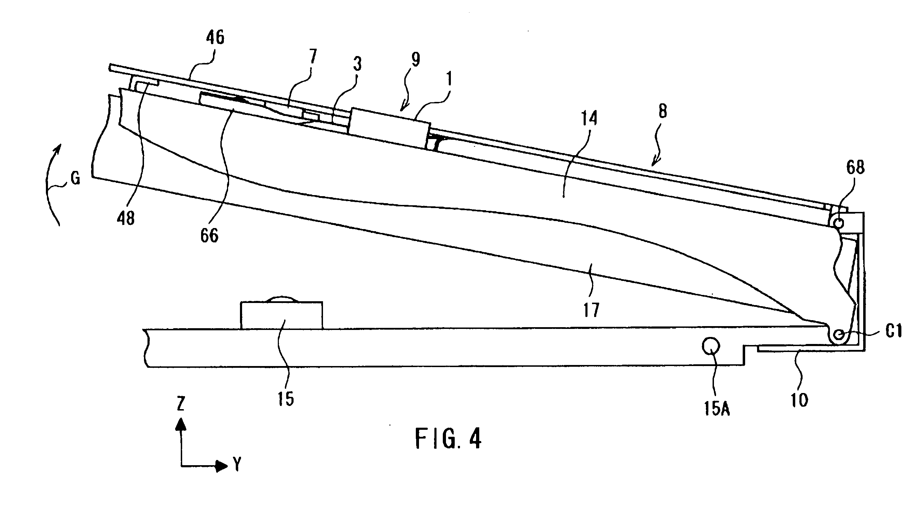

FIG. 4 is a lateral view of when a read-write cartridge accommodating the magneto-optical disk is attached and detached to and from a cartridge holder of the magnetic head lifting and lowering device of the first embodiment.

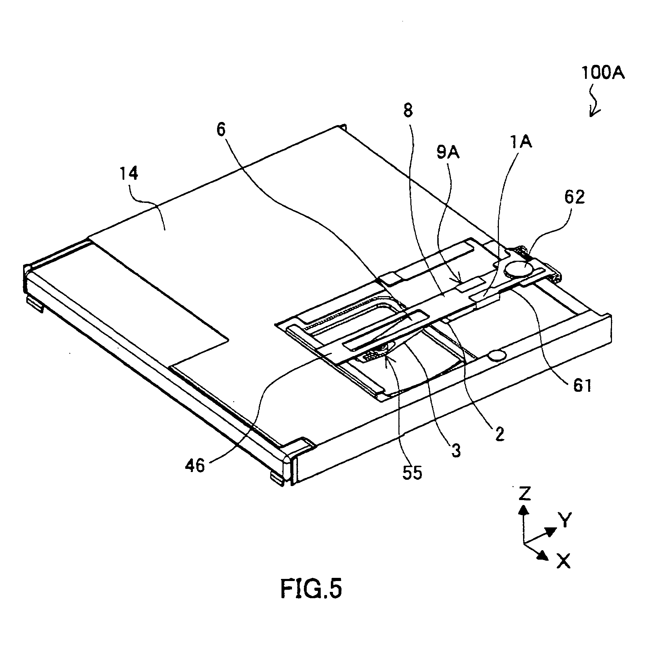

FIG. 5 is a perspective view of the magnetic head lifting and lowering device of the second embodiment.

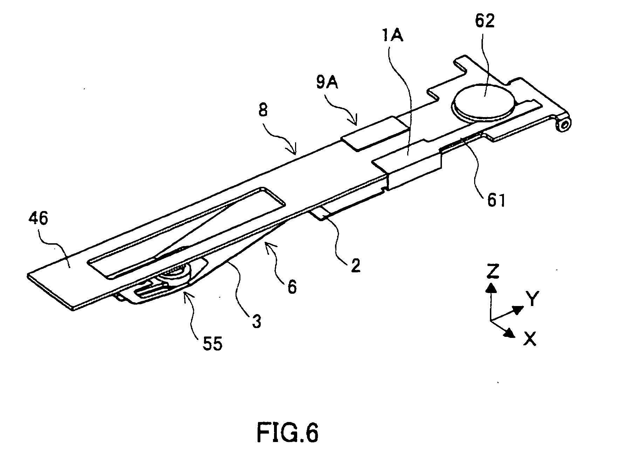

FIG. 6 is a perspective view of the primary components of the magnetic head lifting and lowering device of the second embodiment.

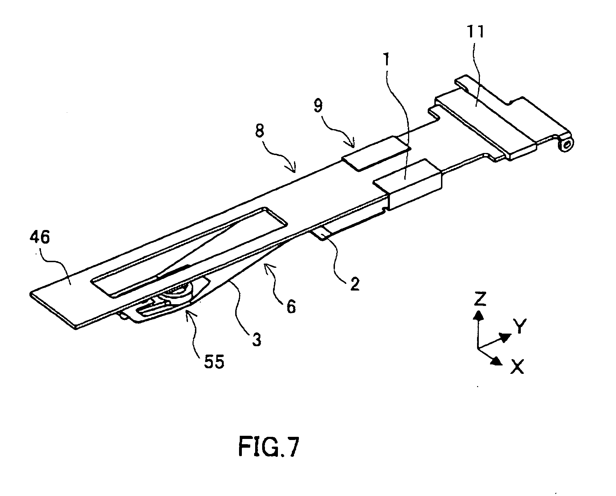

FIG. 7 is a perspective view of the primary components of an example of a magnetic head lifting and lowering device of the third embodiment.

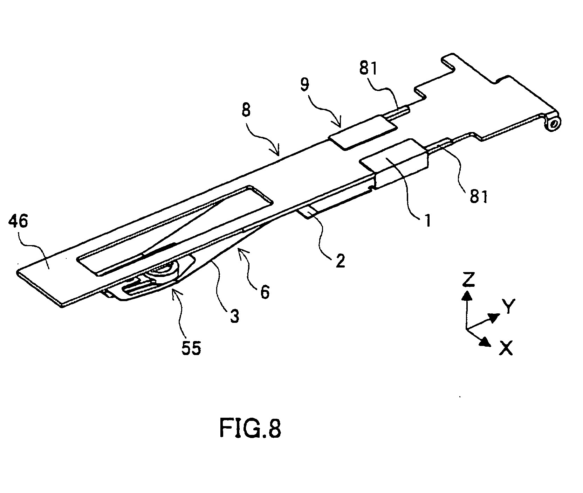

FIG. 8 is a perspective view of the primary components of another magnetic head lifting and lowering device of the third embodiment.

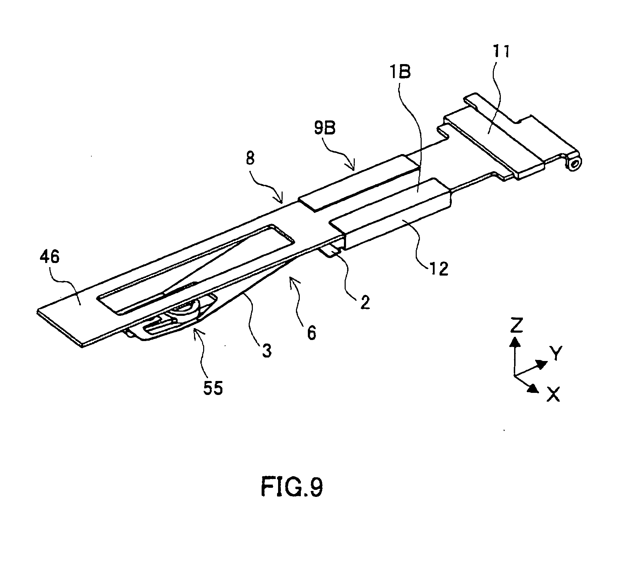

FIG. 9 is a perspective view of the primary components of a magnetic head lifting and lowering device of the fourth embodiment when the magnetic head unit is in the first position.

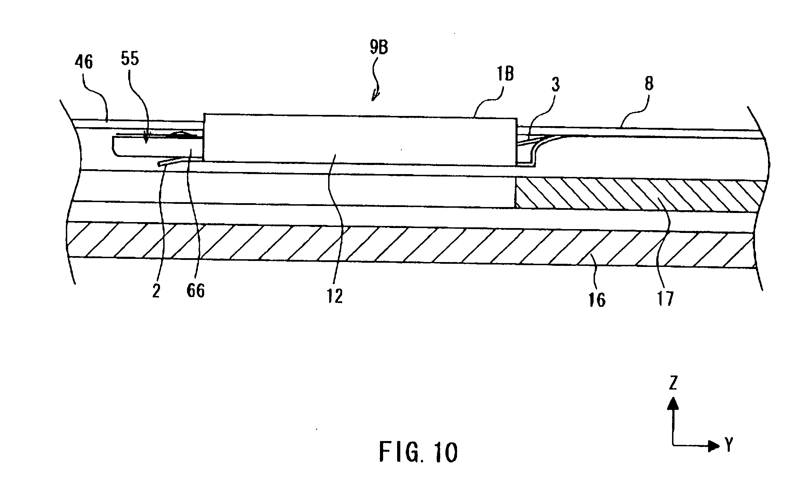

FIG. 10 is a perspective view of the primary components of a magnetic head lifting and lowering device of the fourth embodiment when the magnetic head unit is in the second position.

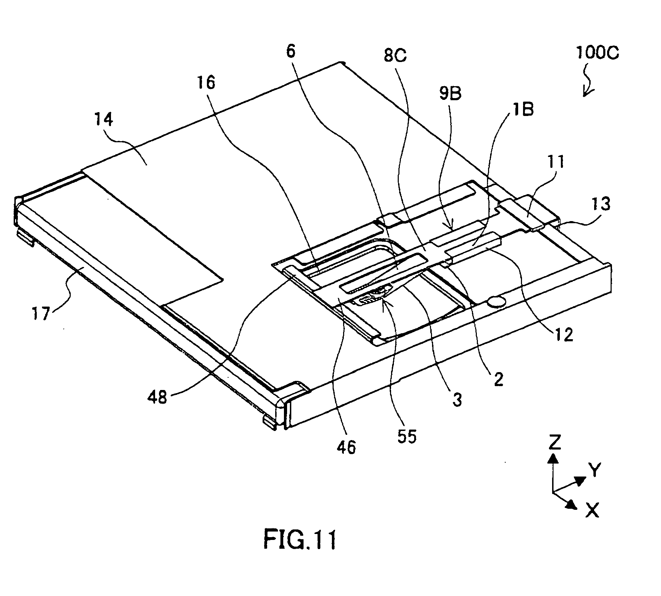

FIG. 11 is a perspective view of the primary components of the magnetic head lifting and lowering device of the fifth embodiment.

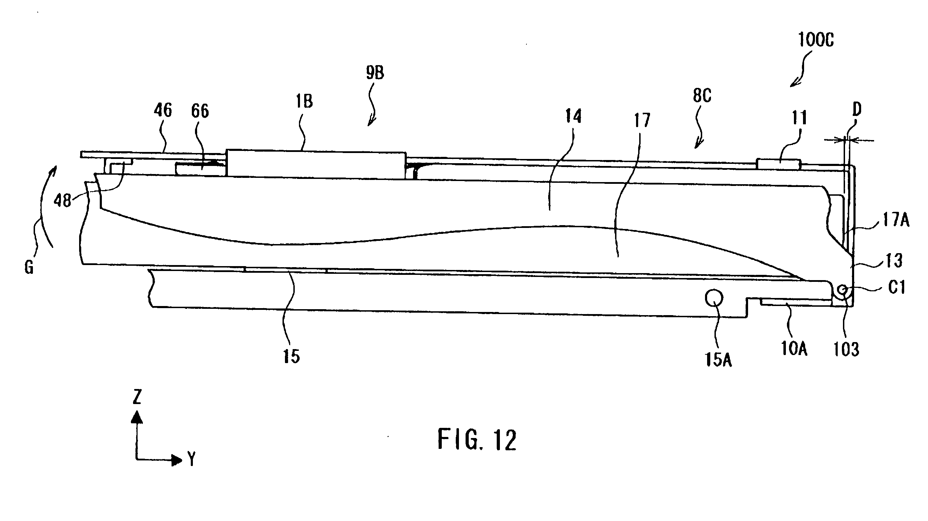

FIG. 12 is a lateral view of the magnetic head lifting and lowering device of the fifth embodiment at the second position (reproduction position).

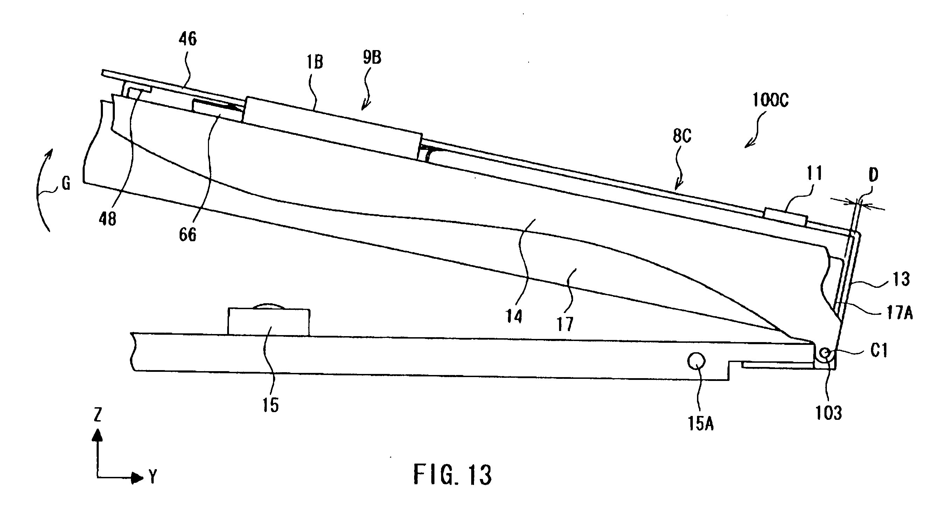

FIG. 13 is a lateral view of the magnetic head lifting and lowering device of the fifth embodiment in the position for attaching and detaching the magneto-optical disk.

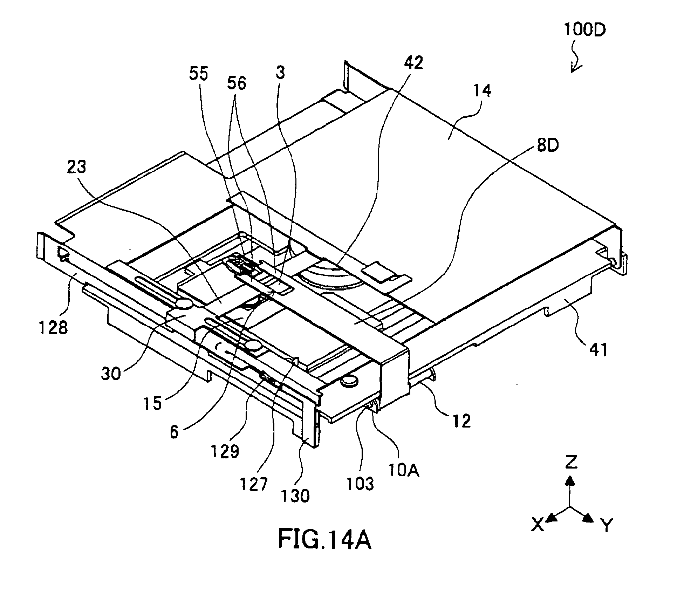

FIG. 14A is a perspective view of the magnetic head lifting and lowering device of the sixth embodiment when a read-write cartridge has not been inserted.

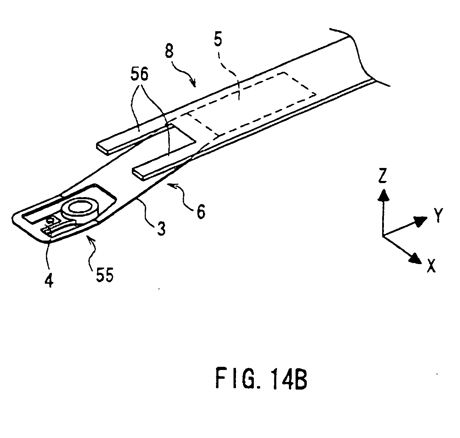

FIG. 14B is a partial perspective view of the fastening plate and the structural elements attached thereto of the magnetic head lifting and lowering device of the sixth embodiment.

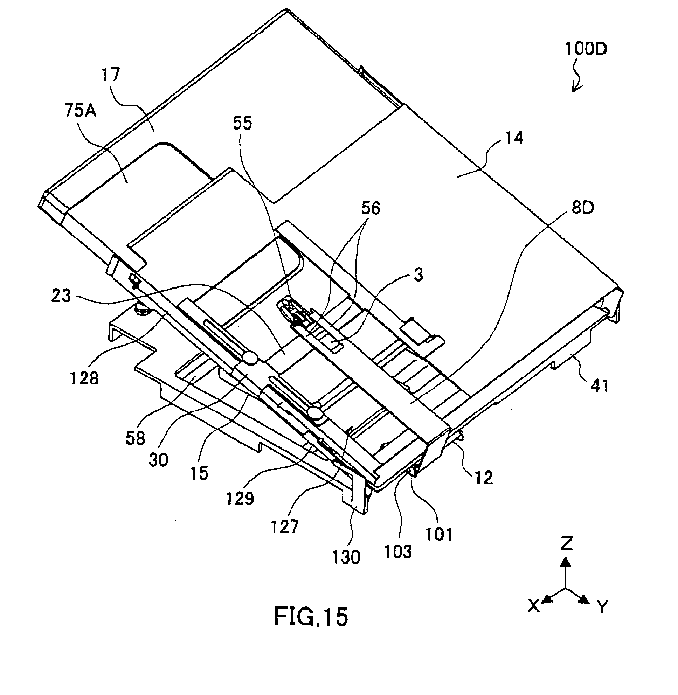

FIG. 15 is a perspective view of the magnetic head lifting and lowering device of the sixth embodiment as a read-write cartridge is inserted.

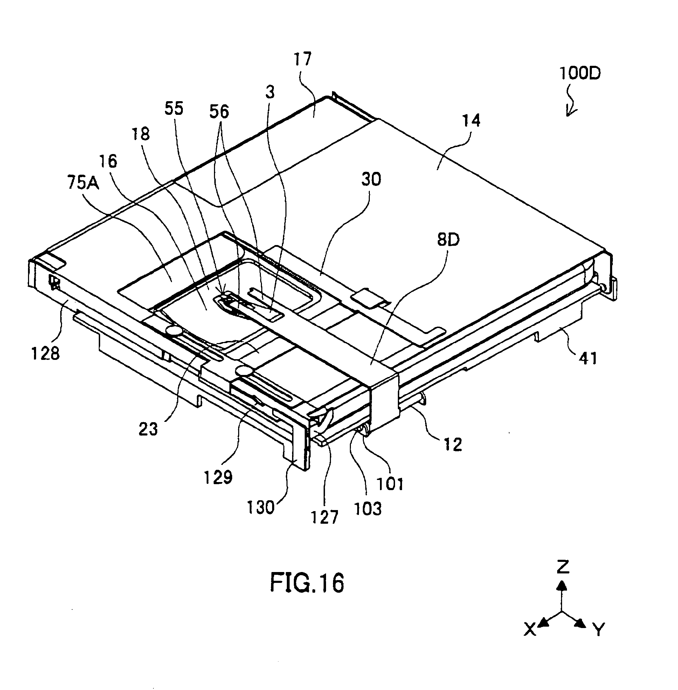

FIG. 16 is a perspective view of the magnetic head lifting and lowering device of the sixth embodiment when a read-write cartridge has been inserted.

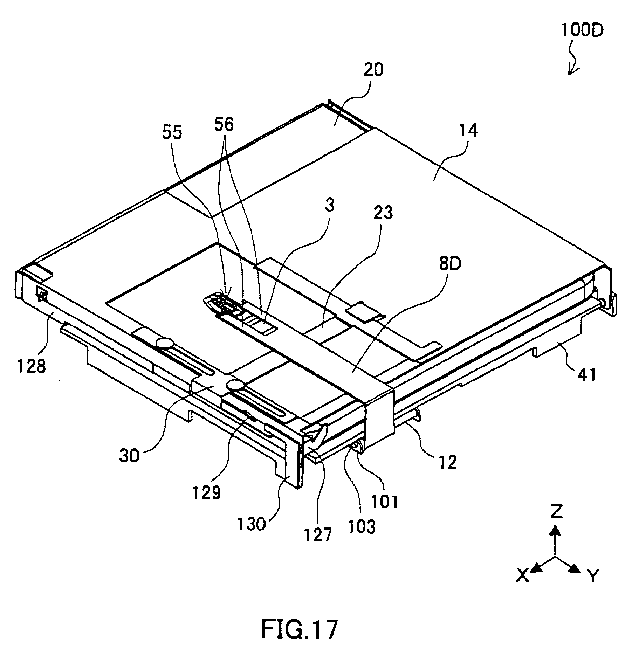

FIG. 17 is a perspective view of the magnetic head lifting and lowering device of the sixth embodiment when a read-only cartridge has been inserted.

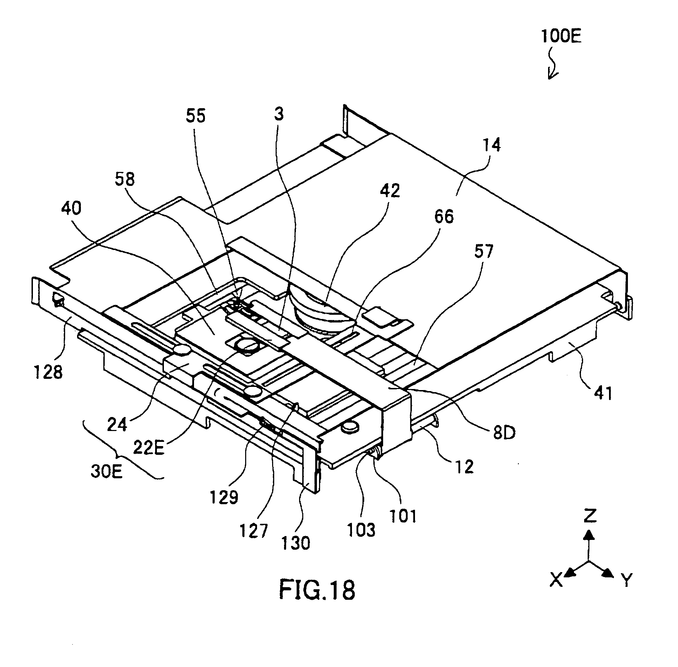

FIG. 18 is a perspective view of the magnetic head lifting and lowering device of the seventh embodiment when a cartridge has not been inserted.

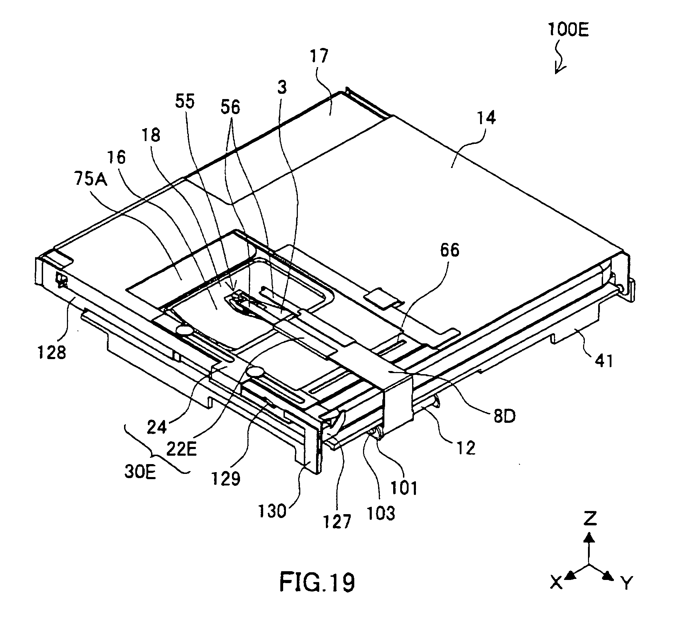

FIG. 19 is a perspective view of the magnetic head lifting and lowering device of the seventh embodiment when a read-write cartridge has been inserted.

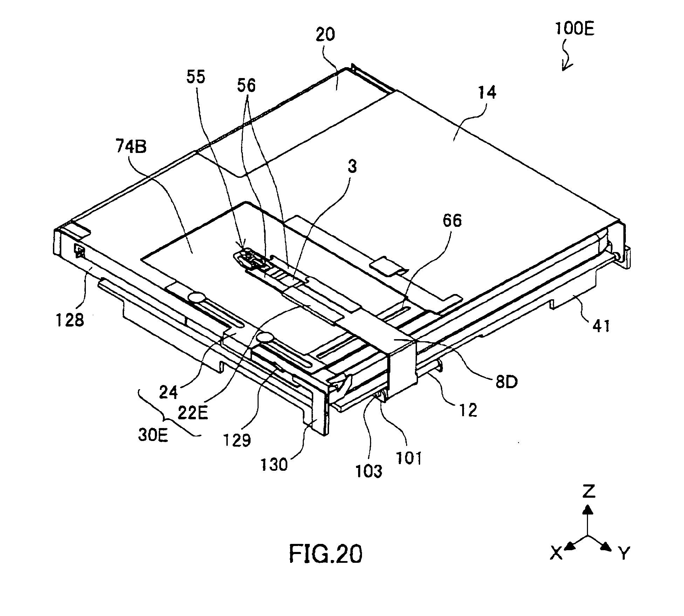

FIG. 20 is a perspective view of the magnetic head lifting and lowering device of the seventh embodiment when a read-only cartridge has been inserted.

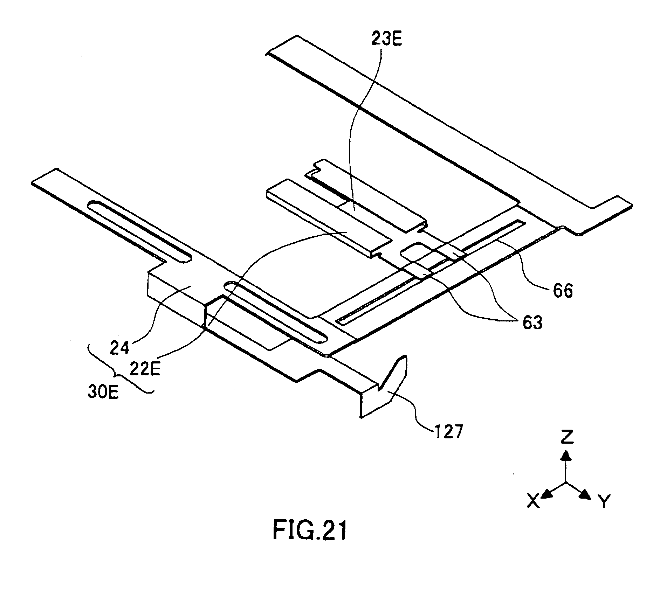

FIG. 21 is a perspective view of the primary components of the magnetic head lifting and lowering device of the seventh embodiment.

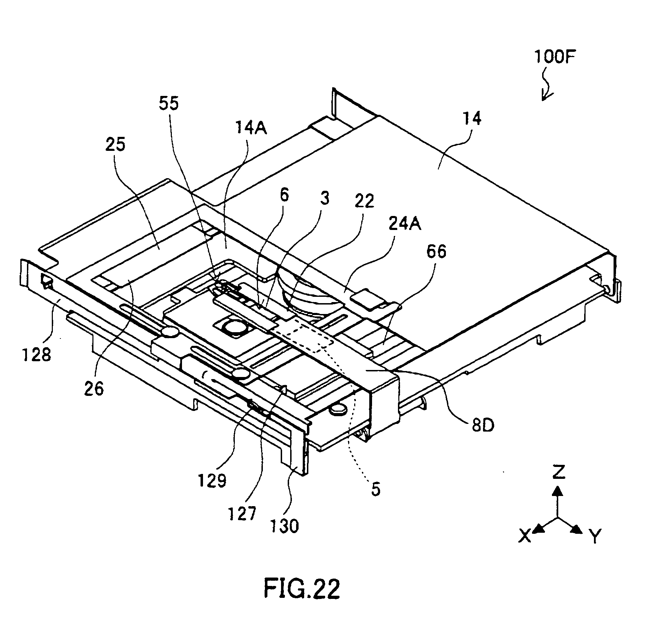

FIG. 22 is a perspective view of the magnetic head lifting and lowering device of an eighth embodiment when a cartridge has not been inserted.

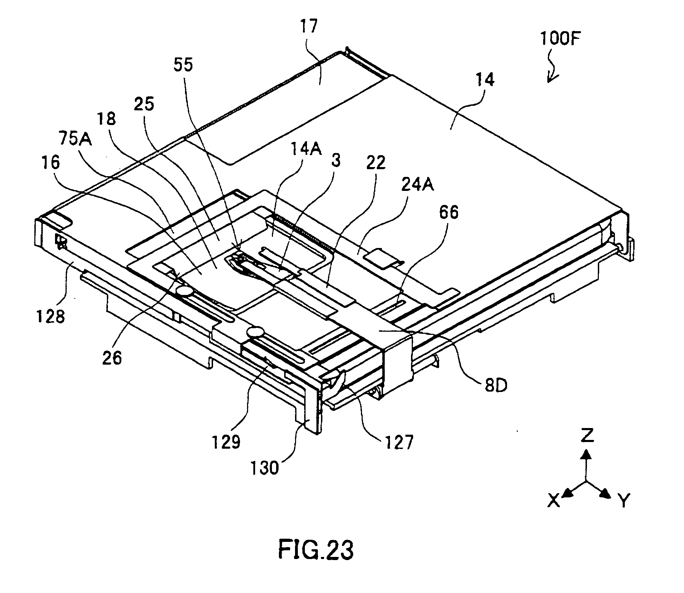

FIG. 23 is a perspective view of the magnetic head lifting and lowering device of the eighth embodiment when a read-write cartridge has been inserted.

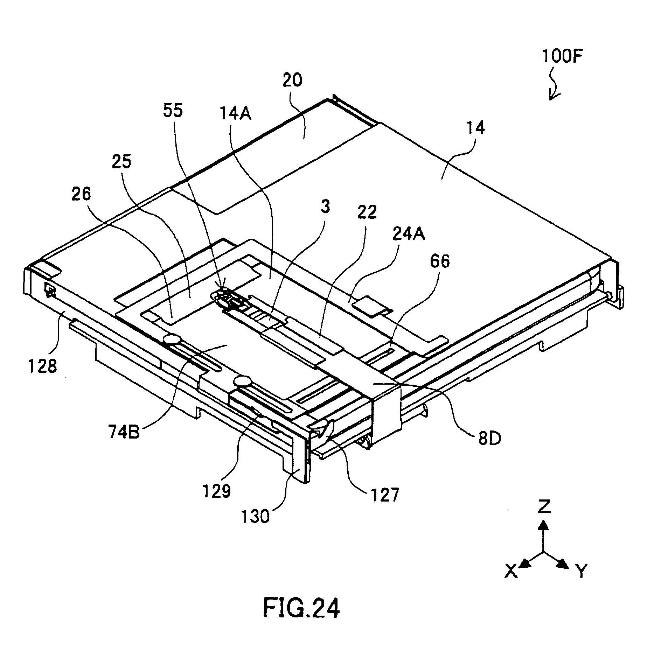

FIG. 24 is a perspective view of the magnetic head lifting and lowering device of the eighth embodiment when a read-only cartridge has been inserted.

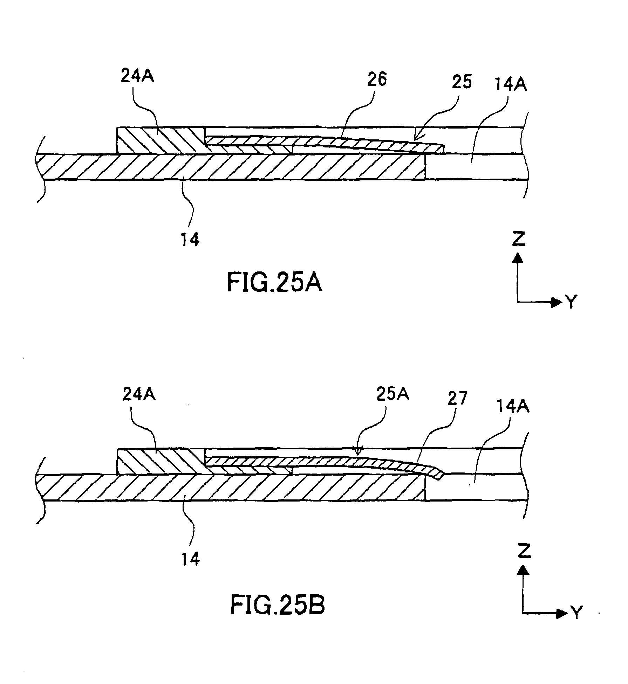

FIG. 25A is a cross sectional diagram for describing a protection member of the magnetic head lifting and lowering device of the eighth embodiment.
FIG. 25B is a cross sectional diagram for describing another protection member of the magnetic head lifting and lowering device of the eighth embodiment.
FIG. 26 is a perspective view of a conventional magnetic head lifting and lowering device.
FIG. 27 is a lateral view of the magnetic head lifting and lowering device shown in FIG. 26.
FIG. 28 is a lateral cross sectional view of the magnetic head lifting and lowering device shown in FIG. 26 when a magneto-optical disk has not been mounted.
FIG. 29 is a lateral cross sectional view of the magnetic head lifting and lowering device shown in FIG. 26 when a magneto-optical disk has been mounted.
FIG. 30 is a lateral cross sectional view of the magnetic head lifting and lowering device shown in FIG. 26 when recording or reproducing to and from a magneto-optical disk.
FIG. 31 is a lateral cross sectional view showing the configuration of the magnetic head unit shown in FIG. 26.
FIG. 32 is a perspective view of the cartridge of a conventional read-write magneto-optical disk.
FIG. 33A is a top view of the cartridge of a conventional read-write magneto-optical disk.
FIG. 33B is a bottom view of the cartridge of a conventional read-write magneto-optical disk.
FIG. 34 is a perspective view of the cartridge of a conventional read-only magneto-optical disk.
FIG. 35A is a top view of a cartridge of a conventional read-only magneto-optical disk.
FIG. 35B is a bottom view of the cartridge of a conventional read-only magneto-optical disk.

With the first magnetic head lifting and lowering device of the present embodiment, a lifter for lifting and lowering the magnetic head between the first position at which information is recorded and which is near or in contact with the information recording medium and a second position that is away from the information recording medium includes a connected sliding member that is connected to the fastening plate in such a manner that it is capable of sliding in a direction linking the attachment portion and the fastened portion of the support member when viewed from the direction perpendicular to the fastening plate. The connected sliding member has a lifting and lowering portion disposed on the leaf spring portion side of the fastening plate. The lifting and lowering portion, when the magnetic head is in the first position, is disposed away from the leaf spring portion on the side of the leaf spring portion that is opposite the magnetic head side.

Thus, when the magnetic head is in the first position, the lifting and lowering portion of the connected sliding member comes into contact with the leaf spring portion when the connected sliding member slides the fastening plate in the first direction toward the attachment portion from the fastening portion of the support member, when seen from the direction vertical to the fastening plate. When the connected sliding member is slid further in the first direction, the position of contact between the lifting and lowering portion and the leaf spring portion moved in the first direction while the lifting and lowering portion pushes up the magnetic head attached to the leaf spring portion, lifting the magnetic head up to the second position. The magnetic head that has been raised to the second position is pushed against the fastening plate.

When the magnetic head is in the second position in this manner, if the connected sliding member slides the fastening plate in the second direction, which is opposite the first direction, the position of contact between the lifting and lowering portion and the leaf spring portion is moved in the second direction while the leaf spring portion is lowered and the magnetic head approaches the information recording medium from the second position. The connected sliding member is slid further in the second direction to release the lifting and lowering portion from the leaf spring portion, lowering the magnetic head to the first position.

The force of the magnetic head that is pressed against the fastening plate pushing up the fastening plate due to the lifting and lowering portion is cancelled out by the force in the opposite direction that acts on the fastening plate from the connected sliding member, which is provided with the lifting and lowering portion that pushes up the magnetic head. Thus, the fastening plate is not lifted up due to the force of the magnetic head pushing up the fastening plate. As a result, the magnetic head lifting and lowering device can be made thin.

In this embodiment, it is preferable that the magnetic head lifting and lowering device further is provided with a drive member for driving the connected sliding member in the sliding direction of the connected sliding member, where the drive member is provided on the fastening plate. Since it is not necessary to provide a lifting and lowering drive portion for driving the connected sliding member in the cartridge holder, which supports the cartridge of the information recording medium, it is possible to reduce the number of components.

It is preferable that the drive member includes a piezoelectric element that is fixed to the fastening plate and vibrates in the sliding direction of the connected sliding member. A piezo electric element is thinner than a drive mechanism that employs gears, and thus it is possible to provide an even thinner magnetic head lifting and lowering device. It is also possible to reduce the number of components further.

It is preferable that the connected sliding member further includes a pair of lateral plates that sandwich the magnetic head in the second position in the direction perpendicular to the sliding direction of the connected sliding member when viewed from the direction perpendicular to the fastening plate. Thus, even if there is a large impact due to dropping the magnetic head lifting and lowering device, the lateral walls sandwiching the magnetic head regulate the position of the magnetic head so that the magnetic head does not significantly move. It is therefore possible to prevent the support member, which supports the magnetic head, from breaking due to an impact.

It is also preferable that the magnetic head lifting and lowering device is further provided with a cartridge holder rotatively connected to the base member and into which a cartridge accommodating the information recording medium is inserted. The fastening plate is connected to the a joining member in such a manner that it rotates in cooperation with rotation of the cartridge holder, and a center of rotation of the cartridge holder matches a center of rotation of the fastening plate.

Since the center of rotation of the cartridge holder and the center of rotation of the fastening plate match one another, the gap between the cartridge holder and the fastening plate is always constant while the cartridge holder and the fastening plate rotate in cooperation with one another, and thus the fastening plate can be disposed closer to the cartridge holder than if the gap between cartridge holder and the fastening plate fluctuates as a result of the center of rotation of the cartridge holder not matching the center of rotation of the fastening plate. Consequently, it is possible to make the magnetic head lifting and lowering device more compact.

In the second magnetic head lifting and lowering device of the present embodiment, the center of rotation of the cartridge holder matches the center of rotation of the fastening plate. For this reason, the gap between the cartridge holder and the fastening plate is always constant while the cartridge holder and the fastening plate rotate in cooperation with one another. Consequently, the fastening plate can be disposed closer to the cartridge holder than in a case where the gap between cartridge holder and the fastening plate fluctuates as a result of the center of rotation of the cartridge holder not matching the center of rotation of the fastening plate. As a result, it is possible to make the magnetic head lifting and lowering device more compact.

In the third magnetic head lifting and lowering device of the present embodiment, the lifter slides in the direction of insertion of the cartridge when the cartridge is inserted. Thus, when the cartridge has been inserted, the lifting and lowering portion, which is disposed at a position where it pushes up the magnetic head, moves in the direction of insertion of the cartridge and comes into contact with the leaf spring portion, and the position of contact between the lifting and lowering portion and the leaf spring portion moves in the direction of insertion of the cartridge. The leaf spring portion drops when the lifting and lowering portion is removed from the leaf spring portion, and thus the magnetic head approaches the information recording medium accommodated in the cartridge that has been inserted. Thus, because the lifter slides in cooperation with the insertion of the cartridge, a lifting and lowering drive portion made of a DC motor and gears for sliding the lifter becomes unnecessary. As a result, it is possible to achieve a thinner magnetic head lifting and lowering device.

In this embodiment, it is preferable that the lifter includes a lifting and lowering slide member that is connected to the fastening plate in such a manner that it is can slide in the insertion direction of the cartridge and that has the lifting and lowering portion, and a cooperative sliding member that engages with the lifting and lowering slide member and that slides in the insertion direction of the cartridge in cooperation with the insertion of the cartridge. The force that acts on the fastening plate from the magnetic head being pushed up by the lifting and lowering portion is cancelled out by the force in the opposite direction that acts on the fastening plate from the connected sliding member, which is provided with the lifting and lowering portion that pushes up the magnetic head, and therefore the fastening plate is not raised or bulged upward due to the force that acts on the fastening plate from the magnetic head. As a result, it is possible to achieve an even thinner magnetic head lifting and lowering device.

The cartridge may be a read-write cartridge having both a magnetic head opening formed in the magnetic head side and through which the magnetic head passes in order to draw near or come into contact with the information recording medium, and an optical head opening formed in the side opposite the magnetic head and through which passes laser light irradiated onto the information recording medium from an optical head in opposition to the magnetic head and sandwiching the information recording medium between them. The cartridge also may be a read-only cartridge having only the optical head opening. The cooperative sliding member may have a protection member that, when the cartridge is not inserted, is disposed to be removed to the side opposite the fastened portion of the support member with respect to the magnetic head when viewed from the direction perpendicular to the fastening plate. The cooperative sliding member may be slidably provided in the cartridge holder. The protection member may be elastically deformed due to bending, and is urged toward the cartridge holder. The protection member, when the read-only cartridge is inserted, is moved in the direction of insertion of the read-only cartridge due to sliding of the cooperative sliding member and enters into an opening of the cartridge holder, coming into contact with the magnetic head between the read-only cartridge that has appeared in the opening of the cartridge holder and the magnetic head. The protection member, when the read-write cartridge is inserted, is moved in the direction of insertion of the read-write cartridge due to sliding of the cooperative sliding member and retreats into the magnetic head opening of the read-write cartridge that has appeared in the opening of the cartridge holder.

When the reproduction cartridge has been inserted, contact between the surface of the reproduction cartridge that that is opposite its magnetic head side and the magnetic head is prevented by the protection member, which contacts the magnetic head between the magnetic head and the reproduction cartridge. Thus, sliding friction and contamination of the magnetic head resulting from the magnetic head coming into contact with the reproduction cartridge can be reduced, and this increases the reliability of the magnetic head.

It is preferable that the protection member is made of resin and has a bent portion that is bent toward the information recording medium or a curved portion that is curved toward the information recording medium. Since the magnetic head that slidably contacts the protection member is not damaged, the reliability of the magnetic head can be increased even further.

It is preferable that the protection member includes a lubricant layer that comes into contact with the magnetic head when the read-only cartridge is inserted. Thus, since friction between the lubricant layer and the magnetic head can be reduced even further, it is possible to further increase the reliability of the magnetic head.

Embodiments of the present invention are described below with reference to the drawings. It should be noted that structural elements that are identical to structural elements of the conventional technology that are shown in FIGS. 26 to 35B have been assigned identical reference numerals and a detailed description thereof is omitted.

### First Embodiment

FIG 1A is a perspective view of a magnetic head lifting and lowering device 100 according to a first embodiment. FIG 1 B is a perspective view of a fastening plate 8 of the magnetic head lifting and lowering device 100 and the structural elements attached thereto. FIG 1C is a cross sectional diagram of the magnetic head unit 55 attached to a leaf spring portion 3 of the magnetic head lifting and lowering device 100. FIG 2 is a lateral cross sectional view of when the magnetic head element 7 of the magnetic head lifting and lowering device 100 is in a first position for recording or reproducing information and which is near or in contact with the magneto-optical device 16, FIG 3 is a lateral cross sectional view of when the magnetic head element 7 is in a second position that is away from the magneto-optical disk 16, and FIG 4 is a lateral view of when the read-write cartridge 17 accommodating the magneto-optical disk 16 is attached and detached to and from a cartridge holder 14 of the magnetic head lifting and lowering device 100.

As shown in FIGS. 1A to 4, the magnetic head lifting and lowering device 100 is provided with the cartridge holder 14. The read-write cartridge 17 accommodating the magneto-optical disk 16 is inserted into the cartridge holder 14. The cartridge holder 14 is connected to a base member (not shown), and is rotatively provided about a center of rotation C1.

The magnetic head lifting and lowering device 100 is provided with a fastening plate 8 that is in opposition to the magneto-optical disk 16 and that can be moved perpendicular to the information tracks of the magneto-optical disk 16. The fastening plate 8 is rotatively attached to a joining member 10 via a shaft 68, and is urged toward the magneto-optical disk 16 by a spring 62. A main shaft 15A is fixed to the base member (not shown). An optical head 15 is attached to the main shaft 15A. The joining member 10 is attached to the optical head 15. Thus, the optical head 15, the joining member 10 and the fastening plate 8 can move as a single unit in a radial direction of the magneto-optical disk 16. The fastening plate 8 is a metal plate such as iron or stainless steel, and is 0.2 mm to 0.7 mm thick. A guide portion 46 that extends in the negative Y direction is formed in the fastening plate 8. The guide portion 46 abuts against a projecting portion 48 of the cartridge holder 14.

As shown in FIG 1C, the magnetic head unit 55 includes the magnetic head element 7 and a sliding member 66 that supports the magnetic head element 7. The sliding member 66 is made of a resin with good slidability such as polyphenylene sulfide or a liquid-crystal polymer, and has a sliding surface 67 that slides over the surface of the magneto-optical disk 16. The magnetic head element 7 has an E-shaped magnetic core 63 made of a soft magnetic material such as ferrite, and a coil 64 wrapped around the central magnetic pole of the magnetic core 63, and is formed attached to the sliding member 66 in a single unit therewith by fixedly adhering it thereto or molding it into a single resin unit therewith.

The magnetic head lifting and lowering device 100 is provided with a support member 6 that is made of a thin plate of a spring material such as stainless steel or phosphor bronze. The sliding member 66 of the magnetic head unit 55 is attached to an attachment portion 4 of the support member 6.

The magnetic head element 7 of the magnetic head unit 55 has a first position shown in FIG 2 where it records and reproduces information and which is near to or in contact with the magneto-optical disk 16, and a second position shown in FIG. 3 where it is moved away from the magneto-optical disk 16.

A fastened portion 5 of the support member 6 is fastened to the magneto-optical disk 16 side of the fastening plate 8. The support member 6 includes a leaf spring portion 3 that is formed oblique to the fastening plate 8 when the magnetic head element 7 is in the first position. The leaf spring portion 3 in the first position, which is the position in which the magnetic head element 7 follows the axial runout of the magneto-optical disk 16 and records to the magneto-optical disk 16, applies a load to the magnetic head unit 55 in the direction of the magneto-optical disk 16 and follows the surface shape of the magneto-optical disk 16.

The magnetic head lifting and lowering device 100 is provided with a lifter 9 for lifting and lowering the magnetic head element 7 between the first position and the second position. The lifter 9 is a metal plate made of iron or stainless steel, for example, and its thickness is from about 0.1 mm to 0.7 mm.

The lifter 9 includes a connected sliding member 1 which is bent to be connected to the fastening plate 8 and when viewed from the direction perpendicular to the fastening plate 8 can slide in the lengthwise direction of the fastening plate 8 linking the attachment portion 4 and the fastened portion 5 of the support member 6. The connected sliding member 1 has a lifting and lowering portion 2 that is disposed on the leaf spring portion 3 side of the fastening plate 8. The lifting and lowering portion 2 is disposed away from the leaf spring portion 3 on the side of the leaf spring portion 3 opposite the magnetic head element 7 when the magnetic head element 7 is in the first position shown in FIG 2.

The connected sliding member 1 has a hook portion 43 and a pressing portion 47. The hook portion 43 interlocks with a slide mechanism 44 having an elongate hole formed in the radial direction of the magneto-optical disk 16. The slide mechanism 44 is provided in the cartridge holder 14 such that it can slide in the sliding direction of the connected sliding member 1, and is driven by a lifting and lowering drive portion 29 made of a motor and gears, for example, attached to the cartridge holder 14. The connected sliding member 1 is attached to the fastening plate 8 pressing the fastening plate 8 in the Z axis direction due to the pressing portion 47.

The magnetic head lifting and lowering operation of moving the magnetic head unit 55 from the first position to the second position is described next.

When the magnetic head unit 55 is in the first position (recording position), that is, when the sliding surface 67 of the sliding member 66 is in sliding contact with the magneto-optical disk 16 as shown in FIG 2, the leaf spring portion 3 applies a load in the direction of contact with the magneto-optical disk 16 to the magnetic head unit 55, and due to a change in its position in correspondence with axial runout or changes in the surface shape of the magneto-optical disk 16, the sliding member 66 stays in constant sliding contact with the magneto-optical disk 16, following the axial runout or the changes in the surface shape of the magneto-optical disk 16. At this time, the connected sliding member 1 is retreated toward the side of the leaf spring portion 3 opposite the magnetic head unit 55 such that the lifting and lowering portion 2 does not come into contact with the leaf spring portion 3.

In moving of the magnetic head unit 55 from the first position (recording position) to the second position (reproduction position), the slide mechanism 44 is slidably moved in the direction of the arrow B shown in FIG 1 and FIG. 2 by the lifting and lowering drive portion 29. At this time, since the hook portion 43 is interlocked with the slide mechanism 44, the connected sliding member 1 is moved toward the magnetic head unit 55 in cooperation with the movement of the slide mechanism 44. Also, the lifting and lowering portion 2 abuts against the leaf spring portion 3. When the connected sliding member 1 is further moved toward the magnetic head unit 55, the point of contact between the lifting and lowering portion 2 and the leaf spring portion 3 moves toward the magnetic head unit 55 while the lifting and lowering portion 2 applies a force in the direction away from the mounted magneto-optical disk 16 (in FIG 2 and FIG 3, the upward direction) to the leaf spring portion 3. At this time, the leaf spring portion 3 to which this force has been applied is bent and elastically deformed, and due to this the magnetic head unit 55 is raised upward. Then, when the connected sliding member 1 is further moved toward the magnetic head unit 55, the lifting and lowering portion 2 abuts against the sliding member 66 and lifts the sliding member 66 upward. The magnetic head element 7 that is supported on the sliding member 66 is therefore pressed upward against the guide portion 46 of the fastening plate 8 and arrives at the second position shown in FIG. 3.

By pressing the magnetic head element 7 against the guide portion 46 of the fastening plate 8, a force F1 in the direction away from the magneto-optical disk 16 acts on the guide portion 46 of the fastening plate 8 from the magnetic head element 7, and a force F2 in the direction toward the magneto-optical disk 16 acts on the guide portion 46 of the fastening plate 8 from the connected sliding member 1 having the lifting and lowering portion 2 lifting up the sliding member 66. Thus, the force F1 in the positive Z axis direction from the magnetic head element 7 and the force F2 in the negative Z axis direction from the connected sliding member 1 cancel each other out. Consequently, the fastening plate 8 is not lifted up in the positive Z axis direction with respect to the joining member 10.

As shown in FIG. 4, when the cartridge holder 14 is rotated in the direction of the arrow G about the center of rotation C1, the fastening plate 8 in which the guide portion 46 is abutted against the projecting portion 48 provided on the cartridge holder 14 is rotated about the shaft 68 so as to carry out attachment and detachment of the cartridge.

Thus, with the magnetic head lifting and lowering device according to the first embodiment, the connected sliding member 1 is connected to the fastening plate 8 and thus the fastening plate 8 is not affected by the force from the magnetic head element 7 in the second position, in which it is pushed against the fastening plate 8, and is not lifted up in the positive Z axis direction. It is therefore possible to achieve a thin magnetic head lifting and lowering device.

### Second Embodiment

FIG 5 is a perspective view of a magnetic head lifting and lowering device 100A according to a second embodiment, and FIG 6 is a perspective view of the primary components of the magnetic head lifting and lowering device 100A. Structural elements that are identical to those described in the first embodiment are assigned identical reference numerals and a detailed description thereof is omitted. The magnetic head lifting and lowering device 100A of the second embodiment is characterized in that a motor 62 with gear is mounted to the fastening plate 8.

The magnetic head lifting and lowering device 100A is provided with a lifter 9A, and the lifter 9A includes a connected sliding member 1A. The connected sliding member 1A has a gear portion 61 that extends toward the motor 62 with gear (positive Y axis direction) and mates with the gear of the motor 62.

The operation of the magnetic head lifting and lowering device 100A is described next. In moving the magnetic head unit 55 from the first position (recording position) to the second position (reproduction position), the motor 62 with gear is rotated and slides the connected sliding member 1A having the gear portion 61 toward the leaf spring portion 3, lifting the magnetic head unit 55 to the second position away from the magneto-optical disk in the same manner as in the first embodiment. The operation of attaching and detaching the cartridge is the same as that of the first embodiment, and thus description thereof is omitted here.

Thus, with the magnetic head lifting and lowering device 100A according to the second embodiment, the motor 62 with gear is mounted on the fastening plate 8 and is connected to the gear portion 61 of the connected sliding member 1A, thus obviating the need for a drive mechanism for driving the lifter in the cartridge holder 14. Thus, in addition to the effects of the first embodiment, it is also possible to reduce the number of components.

### Third Embodiment

FIG 7 is a perspective view showing the primary components of a magnetic head lifting and lowering device according to a third embodiment. Structural elements that are identical to those described in the first embodiment are assigned identical reference numerals and a detailed description thereof is omitted.

The magnetic head lifting and lowering device of the third embodiment is characterized in that the fastening plate 8 is provided with a piezoelectric element 11 that vibrates in the sliding direction of the connected sliding member 1. The piezoelectric element 11 is fixedly adhered to the fastening plate 8 on the side opposite that of the guide portion 46 of the connected sliding member 1. The piezoelectric element 11 may be fixed to the fastening plate 8 by a caulking, a weld or screws.

The operation of the magnetic head lifting and lowering device is described next. In moving the magnetic head unit 55 from the first position (recording position) to the second position (reproduction position), when power is supplied to the piezoelectric element 11 from a power source that is not shown, the piezoelectric element 11 vibrates in the sliding direction of the connected sliding member 1. At this time the duty of the voltage (current) that is applied to the piezoelectric element 11 from the power source can be set to a desired value so as to move the connected sliding member 1 toward or away from the magnetic head unit 55. When the duty is in a range of 9:1 to 6:4, the connected sliding member 1 can be moved toward the magnetic head unit 55. When the duty is in a range of 1:9 to 4:6, the connected sliding member 1 can be moved away from the head unit 55.

The connected sliding member 1 moves toward the magnetic head unit 55 due to the vibration of the piezoelectric element 11, and in the same manner as in the first embodiment, the lifting and lowering portion 2 raises up the magnetic head unit 55 to the second position away from the magneto-optical disk 16.

FIG 8 is a perspective view showing the primary components of another magnetic head lifting and lowering device according to the third embodiment. As shown in FIG 8, by fixedly adhering ultrasonic vibration elements 81 on the lateral surfaces of the fastening plate 8 in place of the piezoelectric element 11, and by vibrating the ultrasonic vibration elements 81 to move the magnetic head unit 55 from the first position (recording position) to the second position (reproduction position), it is possible to achieve the same effects.

### Fourth Embodiment

FIG 9 is a perspective view of the primary components of the magnetic head lifting and lowering device according to a fourth embodiment when the magnetic head unit 55 is in the first position, and FIG 10 is a lateral cross sectional view of the primary components of the magnetic head lifting and lowering device according to the fourth embodiment when the magnetic head unit 55 is in the second position. Structural elements that are identical to those described in the first through third embodiments are assigned identical reference numerals and a detailed description thereof is omitted.

The magnetic head lifting and lowering device of the fourth embodiment is characterized in that the connected sliding member has a pair of lateral plates that sandwich the magnetic head in the second position in the direction perpendicular to the sliding direction of the connected sliding member when viewed from the direction perpendicular to the fastening plate.

The magnetic head lifting and lowering device is provided with a lifter 9B, and the lifter 9B has a connected sliding member 1B. The connected sliding member 1B has a pair of lateral plates 12 formed to be bent such that they oppose one another in the direction vertical to the sliding direction of the connected sliding member 1B when viewed from the direction perpendicular to the fastening plate 8.

The piezoelectric element 11 is fixedly adhered to the fastening plate 8, and when power is supplied to the piezoelectric element 11 from a power source that is not shown, the piezoelectric element 11 vibrates in the sliding direction of the connected sliding member 1 B, sliding the connected sliding member 1 B in the longitudinal direction of the fastening plate 8. At this time the duty of the voltage (current) that is applied from the power source can be set to a desired value so as to slide the connected sliding member 1 B toward (or away from) the magnetic head unit 55.

As shown in FIG. 10, at the second position (reproduction position) the lifting and lowering portion 2 of the connection slide member 1B enters in between the magnetic head unit 55 and the magneto-optical disk 16, and the pair of lateral plates 12 sandwich the magnetic head unit 55 in opposition to one another in the radial direction of the magneto-optical disk 16. The operation of moving from the first position to the second position is identical to that of the third embodiment, and thus description thereof is omitted here.

With portable devices, an impact from 10,000 m/sec² to 40,000 m/sec² is applied to the device if the device is dropped while in use, for example. Since the leaf spring portion 3 to which the magnetic head unit 55 is attached is extremely thin with a thickness in the order of about 0.03 mm to 0.06 mm, the weight of the magnetic head unit 55 is significantly greater than the weight of the leaf spring portion 3 supporting the magnetic head unit 55. Thus, the leaf spring portion 3 breaks easily when the magnetic head unit 55 is moved significantly due to impact. Because the magnetic head unit 55 is in the second position other than when recording, there is a very high risk that the magnetic head unit 55 will receive impact while in the second position.

In the fourth embodiment, the lateral plates 12 function as position regulating means for regulating the position of the magnetic head unit 55 in the radial direction of the magneto-optical disk 16 (in the direction perpendicular to the information tracks of the magneto-optical disk 16, or in other words, the X axis direction in FIG. 9). Thus not only is the position of the magnetic head unit 55 regulated vertically by the lifting and lowering portion 2 and the guide portion 46, but its position in the radial direction of the magneto-optical disk 16 can also be regulated. Consequently, the risk of damage to the leaf spring portion 3 supporting the magnetic head unit 55 due to an impact, for example, is reduced.

Thus, with the magnetic head lifting and lowering device of the fourth embodiment, the leaf spring portion 3 is not damaged even when there is a large impact to it while in the second position, and in addition to the effects of the first embodiment, it is also possible to increase the reliability of the device.

### Fifth Embodiment

FIG 11 is a perspective view of a magnetic head lifting and lowering device 100C according to a fifth embodiment, FIG. 12 is a lateral view of the magnetic head lifting and lowering device 100C at the second position (recording position), and FIG. 13 is a lateral view of the magnetic head lifting and lowering device 100C at the position for attaching and detaching the magneto-optical disk 16. Structural elements that are identical to those described in the first through fourth embodiments are assigned identical reference numerals and a detailed description thereof is omitted.

The magnetic head lifting and lowering device of the fifth embodiment is characterized in that the cartridge holder 14 is rotatively connected to a base member (not shown), and a rotation axis of the cartridge holder 14 and a rotaion axis of the fastening plate 8C match one another.

The fastening plate 8C, which slidably supports the lifter 9B, has an opposing plate 13 extending to be bent with respect to a lateral surface 17A on the insertion direction side of the read-write cartridge 17 inserted into the cartridge holder 14, and is rotatively connected around a shaft 103 attached to a joining member 10A. An optical head 15 is attached to a main shaft 15A fixed to a base member (not shown), and can move in a radial direction of a magneto-optical disk 16. The joining member 10A is fixed to the optical head 15. Thus, the optical head 15, the joining member 10A and the fastening plate 8C can move as a single unit in a radial direction of the magneto-optical disk 16. The cartridge holder 14 is rotatively connected to the base member (not shown). The center of rotation C1 of the cartridge holder 14 and the center axis of rotation of the fastening plate 8C (the center axis of the shaft 103) match one another.

The cartridge holder 14 is rotated in the direction of the arrow G about the center of rotation C1 when the cartridge is attached and detached. The fastening plate 8C, in which the guide portion 46 is abutting against the projecting portion 48 of the cartridge holder 14, also is rotated in the direction of the arrow G about the shaft 103 in cooperation with the rotation of the cartridge holder 14. The cartridge is then attached or detached to or from the cartridge holder 14.

In this manner, the center of rotation of the cartridge holder 14 and the center of rotation of the fastening plate 8 are both the shaft 103 provided in the joining member 10A and thus are matching. Thus, a gap D between the lateral surface 17A of the cartridge 17 inserted into the cartridge holder 14 and the opposing plate 13 of the fastening plate 8C is always constant while the fastening plate 8C is rotating in cooperation with the rotation of the cartridge holder 14. It is therefore possible to dispose the opposing plate 13 near the lateral surface 17A of the cartridge 17, and as a result the magnetic head lifting and lowering device can be made smaller in the Y axis direction.

Thus, with the magnetic head lifting and lowering device of the fifth embodiment, the center of rotation of the fastening plate 8C with respect to the joining member 10A and the center of rotation of the cartridge holder 14 with respect to the joining member 10A are matching. Thus the opposing plate 13 can be disposed near the lateral surface 17A of the cartridge 17, and in addition to the effects of the first through fourth embodiments, the magnetic head lifting and lowering device can be made compact.

### Sixth Embodiment

FIG. 14A is a perspective view of a magnetic head lifting and lowering device 100D according to the sixth embodiment in a state where a read-write cartridge has yet to be inserted, and FIG. 14B is a partial perspective view of a fastening plate 8D of the magnetic head lifting and lowering device 100D and the structural elements attached thereto. FIG 15 is a perspective view of the magnetic head lifting and lowering device 100D while the read-write cartridge 17 is being inserted. FIG 16 is a perspective view of the magnetic head lifting and lowering device 100D when the read-write cartridge 17 has been inserted, and FIG 17 is a perspective view of the magnetic head lifting and lowering device 100D when the read-only cartridge 20 has been inserted. Structural elements that are identical to those described in the first through fifth embodiments are assigned identical reference numerals and a detailed description thereof is omitted.

The magnetic head lifting and lowering device 100D is provided with the cartridge holder 14. The read-write cartridge 17 or the read-only cartridge 20 accommodating the magneto-optical disk 16 is inserted into the cartridge holder 14.

The magnetic head lifting and lowering device 100D is provided with a fastening plate 8D. The fastening plate 8D is provided such that it can move in the direction perpendicular to the information tracks of the magneto-optical head 16, and it is in opposition to the magneto-optical disk 16. The fastening plate 8D is provided such that it can rotate about the shaft 103 provided for the joining member 10A, and is urged toward the magneto-optical disk 16 by the spring 12. A pair of guide portions 56 is formed in the tip of the fastening plate 8D.

The magnetic head lifting and lowering device 100D is provided with the magnetic head unit 55, which is provided with a magnetic head element for applying a magnetic field to the magneto-optical disk 16, and a support member 6 for supporting the magnetic head unit 55.

The support member 6 includes the attachment portion 4 to which the magnetic head unit 55 is attached, the fastened portion 5 fastened to the cartridge holder 14 side of the fastening plate 8D, and the leaf spring portion 3 formed between the attachment portion 4 and the fastened portion 5. The attachment portion 4 and the fastened portion 5 of the support member 6 are disposed in that order in the insertion direction when the cartridge is inserted into the cartridge holder 14 when viewed from the direction perpendicular to the fastening plate 8D.

The magnetic head lifting and lowering device 100D is provided with a lift mechanism 30. The lift mechanism 30 has a lifting and lowering portion 23 disposed on the leaf spring portion 3 side of the fastening plate 8D. The lifting and lowering portion 23 is disposed at a position where it pushes up the magnetic head unit 55 toward the fastening plate 8D when a cartridge has not been inserted, as shown in FIG. 14A. The lift mechanism 30 is a metal plate made of iron or stainless steel, and is from 0.1 mm to 0.7 mm thick.

The lift mechanism 30 has a cartridge abutting portion 127 formed by plate metal processing. The cartridge abutting portion 127 is formed to project from a notch formed in the lateral surface of the cartridge holder 14 into the region where the cartridge 17 is inserted.

A lift spring 128 is provided on the lateral surface of the cartridge holder 14. One end of the lift spring 128 is fastened to the cartridge holder 14 and its other end is fastened to the lift mechanism 30. The lift spring 128 urges the lift mechanism 30 in the negative Y direction.

The optical head 15 is disposed in opposition to the magnetic head unit 55, sandwiching the magneto-optical disk 16 between them, and is attached to the base 41 in such a manner that it can be moved in the X direction. The spindle motor 42 is attached to the base 41, and actuates rotation of the magneto-optical disk that is inserted. The cartridge holder 14 is rotatively attached to the base 41.

As mentioned previously, among magneto-optical disks, a representative example of which is a MD, there are the read-write cartridge 17 shown in FIG. 32, FIG 33A, and FIG. 33B, and the read-only cartridge 20 shown in FIG. 34, FIG 35A, and FIG 35B.

The operation of the magnetic head lifting and lowering device 100D is described next.

When the magneto-optical disk has not yet been inserted, the lifting and lowering portion 23 lifts up the magnetic head unit 55 in the positive Z axis direction, as shown in FIG. 14A.

When inserting the read-write cartridge 17, the read-write cartridge 17 is inserted with the cartridge holder 14 slanted with respect to the base 41 as shown in FIG 15. Once inserted, the lateral surface on the insertion side of the read-write cartridge 17 pushes the cartridge abutting portion 127. Due to the force of inserting the cartridge, the cartridge abutting portion 127 is moved in the direction of insertion of the cartridge. Consequently, the lift mechanism 30 provided with the cartridge abutting portion 127 slides in the direction of insertion of the cartridge and interlocks with the hook portion 129 formed as a notch in the lateral surface of the cartridge holder 14.

A shutter 75A of the read-write cartridge 17 interlocks with the cartridge holder 14, and the shutter 75A opens due to the action of inserting the read-write cartridge 17. This exposes the magnetic head opening 18 and the optical head opening 19.

When the read-write cartridge 17 has been inserted, then, as shown in FIG. 16, the lifting and lowering portion 23 of the lift mechanism 30 interlocked with the hook portion 129 is completely separated from the leaf spring portion 3. The magnetic head unit 55 enters into the magnetic head opening 18 and is pushed against and makes sliding contact with the magneto-optical disk 16 by the leaf spring portion 3.

The laser light that is emitted from the optical head 15 passes through the optical head opening 19 and is irradiated onto the magneto-optical disk 16, and in cooperation with the modulated magnetic field from the magnetic head element 7, information is recorded to the magneto-optical disk 16 that is revolved by the spindle motor 42.

As shown in FIG. 17, when the read-only cartridge 20 has been inserted, the magnetic head unit 55 abuts against the read-only cartridge 20 because the read-only cartridge 20 does not have the magnetic head opening 18.

When removing the read-write cartridge 17 or the read-only cartridge 20 from the cartridge holder 14, if the cartridge holder 14 is tilted by rotating it with respect to the base 41, a lock release plate 130, which is an L-shaped metal component fastened to the base 41, pushes the hook portion 129 down toward the base 41, releasing the hook portion 129 from the lift mechanism 30. Thus, the lift mechanism 30 is pulled and moved in the negative Y direction by the lift spring 128. The lifting and lowering portion 23 of the lift mechanism 30 abuts against the leaf spring portion 3 and pushes it up in the positive Z direction, bending and elastically deforming the leaf spring portion 3, and then abuts against the magnetic head unit 55 and lifts up the magnetic head unit 55. The cartridge abutting portion 127 of the light mechanism 30 that abuts against the read-write cartridge 17 or the read-only cartridge 20 pushes out and discharges the cartridge.

Thus, with the magnetic head lifting and lowering device of the sixth embodiment, when the cartridge is inserted the lift mechanism 30 slides in the direction in which the cartridge is inserted. Thus, when the cartridge has not been inserted, the lifting and lowering portion 23 disposed at a position where it pushes up the magnetic head unit 55 is moved in the direction of insertion of the cartridge and comes into contact with the leaf spring portion 3, and the point of contact between the lifting and lowering portion 23 and the leaf spring portion 3 is moved in the direction of insertion of the cartridge. The plate spring potion 3 drops down when the lifting and lowering portion 23 is released from the leaf spring portion 3, and thus the magnetic head unit 55 draws toward the magneto-optical disk accommodated in the cartridge that has been inserted. Since the lift mechanism 30 slides in cooperation with the insertion of a cartridge in this manner, the need for a lifting and lowering drive portion constituted by a DC motor and gears for sliding the lift mechanism 30 is obviated. The magnetic head lifting and lowering device therefore can be made thin.

### Seventh Embodiment

FIG 18 is a perspective view of a magnetic head lifting and lowering device 100E according to a seventh embodiment in a state where a cartridge has yet to be inserted, FIG 19 is a perspective view of the magnetic head lifting and lowering device 100E when the read-write cartridge 17 has been inserted, FIG 20 is a perspective view of the magnetic head lifting and lowering device 100E when the read-only cartridge has been inserted, and FIG 21 is a perspective view of the primary components of the magnetic head lifting and lowering device 100E. Structural elements that are identical to those described in the first through sixth embodiments are assigned identical reference numerals and a detailed description thereof is omitted.

The magnetic head lifting and lowering device 100E of the seventh embodiment is characterized in that it is provided with a lift mechanism 30E. The lift mechanism 30E includes a lifting and lowering slide member 22E that is connected to the fastening plate 8D in such a manner that it can slide in the direction of insertion of the cartridge and has a lifting and lowering portion 23E, and a cooperative sliding member 24 that engages with the lifting and lowering slide member 22E and slides in the direction of insertion of the cartridge in cooperation with insertion of the cartridge.

The cooperative sliding member 24 has a radial slide hole 66, which is an elongate hole formed in the X axis direction. The lifting and lowering slide member 22E has a hook portion 63 that slidably engages the radial slide hole 66 in the X axis direction. The lifting and lowering slide member 22E is a metal plate such as iron or stainless steel, or a resin, and its thickness is from 0.1 mm to 0.7 mm.

The operation of the magnetic head lifting and lowering device 100E is described next.

As shown in FIG. 18, when a cartridge is not inserted, the lifting and lowering portion 23E of the lifting and lowering slide member 22E lifts up the magnetic head unit 55 in the positive Z direction.

Referring to FIG. 19, when the read-write cartridge 17 is inserted, the cooperative sliding member 24 is slid in the direction of insertion of the cartridge in cooperation with the insertion of the read-write cartridge 17. The lifting and lowering slide member 22E having the hook portion 63 that is engaged with the radial slide hole 66 of the cooperative sliding member 24 slides in the direction of insertion of the read-write cartridge 17 in cooperation with the sliding of the cooperative sliding member 24. Thus, the lifting and lowering portion 23E of the lifting and lowering slide member 22E is separated from the magnetic head unit 55 and the leaf spring portion 3, and thus the magnetic head unit 55 is pushed against the magneto-optical disk 16 through the magnetic head opening 18 of the read-write cartridge 17 by the leaf spring portion 3.

As shown in FIG 20, when the read-only cartridge 20 is inserted, the lifting and lowering portion 23E is separated from magnetic head unit 55 and the leaf spring portion 3 in the same manner as when the read-write cartridge 17 has been inserted. Since the read-only cartridge 20 is not provided with the magnetic head opening 18, the magnetic head unit 55 comes into contact with the main cartridge unit 74B of the read-only cartridge 20.

With the magnetic head lifting and lowering device of the seventh embodiment, when a cartridge is not inserted, the force in the Z axis direction that acts on the fastening plate 8D from the magnetic head unit 55, which is pushed up by the lifting and lowering portion 23E, is cancelled out by the force in the opposite direction (negative Z axis direction) that acts on the fastening plate 8D from the lifting and lowering slide member 22E, which is provided with the lifting and lowering portion 23E that pushes up the magnetic head unit 55.Thus, upward lifting or bulging of the fastening plate due to the force that acts on the fastening plate from the magnetic head unit 55 does not occur. The magnetic head lifting and lowering device therefore can be made even thinner.

### Eighth Embodiment

FIG 22 is a perspective view of a magnetic head lifting and lowering device 100F according to an eighth embodiment in a state where a cartridge has yet to be inserted, FIG 23 is a perspective view of the magnetic head lifting and lowering device 100F when a read-write cartridge has been inserted, and FIG 24 is a perspective view of the magnetic head lifting and lowering device 100F when a read-only cartridge has been inserted. FIG 25A is a cross sectional diagram for describing a protection member 25 of the magnetic head lifting and lowering device 100F, and FIG 25B is a cross sectional diagram for describing another protection member 25A. Structural elements that are identical to those described in the first through sixth embodiments are assigned identical reference numerals and a detailed description thereof is omitted.

The magnetic head lifting and lowering device 100F according to the eighth embodiment is characterized in that it is provided with a cooperative sliding member 24A having a protection member 25 that, when a cartridge has not been inserted, is disposed removed toward the side of the support member 6 that is opposite the fastened portion 5 with respect to the magnetic head unit 55, when viewed in the direction perpendicular to the fastening plate 8D.

The protection member 25 has the shape of a thin plate, and is fixedly adhered to the cooperative sliding member 24A by adhering or fusing it thereto. The protection member 25 is made of a spring material such as stainless steel or phosphor bronze, or a liquid-crystal polymer or a resin such as polycarbonate.

As shown in FIG. 25A, the protection member 25 has a bent portion 26 that is bent at its side near the magnetic head unit 55 and slants toward the cartridge holder 14 (in the negative Z direction), and is elastically deformed by bending and urged toward the cartridge holder 14. The bent portion 26 is positioned at the edge of an opening 14A of the cartridge holder 14. It is also possible for the bent portion 26 to include a lubricant layer that comes into contact with the magnetic head unit 55 when the read-only cartridge 20 has been inserted. It should be noted that as shown in FIG. 25B, it is also possible to provide a protection member 25A that has a curved portion 27 that curves toward the cartridge holder 14 (in the negative Z direction) and is elastically deformed by bending and urged toward the cartridge holder 14.

The operation of the magnetic head lifting and lowering device 100F is described next.

As shown in FIG. 22 and FIG. 25A, when a cartridge has not been inserted, the protection member 25 places the bent portion 26 projecting out from the cooperative sliding member 24A at the edge of the opening 14A of the cartridge holder 14.

As shown in FIG 23, when the read-write cartridge 17 is inserted, the shutter 75A of the read-write cartridge 17 engages with an engagement portion of the cartridge holder 14(not shown), and when the read-write cartridge 17 is inserted further, the shutter 75A slides with respect to the main cartridge unit and the magnetic head opening 18 appears in the opening 14A of the cartridge holder 14. The protection member 25 moves in the direction of insertion of the read-write cartridge 17 (the positive Y direction) together with the cooperative sliding member 24A. Due to the elastic returning force of the bent portion 26, which is projecting out from the cooperative sliding member 24A, of the protection member 25, it enters into the magnetic head opening 18 of the read-write cartridge 17 that has appeared in the opening 14A of the cartridge holder 14, and does not come into contact with the magnetic head unit 55.

As shown in FIG. 24, when the read-only cartridge 20 is inserted, the surface of the main cartridge unit 74B of the read-only cartridge 20 appears in the opening 14A of the cartridge holder 14. The protection member 25 moves together with the cooperative sliding member 24A in the direction in which the read-only cartridge 20 is inserted (the positive Y direction). Due to the elastic returning force of the bent portion 26, which is projecting out from the cooperative sliding member 24A, of the protection member 25, it enters into the opening 14A of the cartridge holder 14, and comes into contact with the magnetic head unit 55 between the surface of the main cartridge unit 74B that has appeared in the opening 14A of the cartridge holder 14 and the magnetic head unit 55.

The magnetic head unit 55 moves in the X axis direction together with the optical head, which is not shown, during the reproducing operation as well, and thus it is preferable that a sliding material or a lubricating agent is applied to the surface of the protection member 25 that is in sliding contact with the magnetic head unit 55. Since the magnetic head unit 55 is moved in the X axis direction by a DC motor, this allows the power that is consumed by moving to be reduced.

Thus, with the magnetic head lifting and lowering device of the eighth embodiment, the cooperative sliding member 24A is provided with a thin plate-shaped protection member 25 that can move as a single unit with the cooperative sliding member 24A, and thus there is no sliding contact between the magnetic head unit 55 and the read-only cartridge 20 when the read-only cartridge 20 has been inserted. Therefore, the reliability of the magnetic head lifting and lowering unit is increased.

The present invention can be adopted for magnetic head lifting and lowering devices, and in particular for magnetic head lifting and lowering devices that are provided in magneto-optical recording and reproducing devices.

## Claims

1. A magnetic head lifting and lowering device, comprising:
a fastening plate, which is provided such that it is parallel to a surface of a disk-shaped information recording medium and which is in opposition to the disk-shaped information recording medium;
a magnetic head having a first position at which information is recorded and which is near or in contact with an information recording medium, and a second position that is away from an information recording medium;
a support member including an attachment portion to which the magnetic head is attached, a fastened portion fastened to an information recording medium side of the fastening plate, and a leaf spring portion formed in a direction oblique to the fastening plate between the attachment portion and the fastened portion when the magnetic head is in the first position; and
a lifter for lifting and lowering the magnetic head between the first position and the second position,
wherein the lifter includes a connected sliding member that is connected to the fastening plate in such a manner that it is capable of sliding in a direction linking the attachment portion and the fastened portion of the support member when viewed from the direction perpendicular to the fastening plate;
wherein the connected sliding member has a lifting and lowering portion disposed on the leaf spring portion side of the fastening plate; and
wherein the lifting and lowering portion, when the magnetic head is in the first position, is disposed away from the leaf spring portion on the side of the leaf spring portion that is opposite the magnetic head side.

2. The magnetic head lifting and lowering device according to claim 1, further comprising:
a drive member for driving the connected sliding member in the sliding direction of the connected sliding member;
wherein the drive member is provided on the fastening plate.

3. The magnetic head lifting and lowering device according to claim 2,
wherein the drive member includes a piezoelectric element that is fixed to the fastening plate and vibrates in the sliding direction of the connected sliding member.

4. The magnetic head lifting and lowering device according to claim 1,
wherein the connected sliding member further includes a pair of lateral plates that sandwich the magnetic head in the second position in the direction perpendicular to the sliding direction of the connected sliding member when viewed from the direction perpendicular to the fastening plate.

5. The magnetic head lifting and lowering device according to claim 1, further comprising:
a cartridge holder rotatively connected to the base member and into which a cartridge accommodating an information recording medium is inserted;
wherein the fastening plate is connected to a joining member in such a manner that it rotates in cooperation with rotation of the cartridge holder; and
wherein a center of rotation of the cartridge holder matches a center of rotation of the fastening plate.

6. A magnetic head lifting and lowering device comprising:
a cartridge holder rotatively connected to a base member and into which a cartridge accommodating a disk-shaped information recording medium is inserted;
a fastening plate, which is provided such that it is parallel to a surface of an information recording medium, and which is in opposition to an information recording medium and connected to a joining member in such a manner that it can rotate in cooperation with rotation of the cartridge holder;
a magnetic head for applying a magnetic field to the information recording medium; and
a support member fastened to the fastening plate and supporting the magnetic head;
wherein a center of rotation of the cartridge holder matches a center of rotation of the fastening plate.

7. A magnetic head lifting and lowering device comprising:
a cartridge holder into which a cartridge accommodating a disk-shaped information recording medium is inserted;
a fastening plate, which is provided such that it is parallel to a surface of an information recording medium, and which is in opposition to an information recording medium;
a magnetic head for applying a magnetic field to the information recording medium;
a support member including an attachment portion to which the magnetic head is attached, a fastened portion fastened to the cartridge holder side of the fastening plate, and a leaf spring portion formed between the attachment portion and the fastened portion; and
a lifter that raises and lowers the magnetic head with respect to the information recording medium;
wherein the attachment portion and the fastened portion of the support member are disposed in that order in the insertion direction of a cartridge when a cartridge is inserted into the cartridge holder;
wherein the lifter has a lifting and lowering portion disposed on the leaf spring portion side of the fastening plate;
wherein the lifter, when a cartridge is inserted, slides in the direction of insertion of a cartridge; and
wherein the lifting and lowering portion is disposed at a position where it pushes up the magnetic head toward the fastening plate when the cartridge has not been inserted.

8. The magnetic head lifting and lowering device according to claim 7,
wherein the lifter includes a lifting and lowering slide member that is connected to the fastening plate in such a manner that it can slide in the insertion direction of a cartridge and that has the lifting and lowering portion, and a cooperative sliding member that engages with the lifting and lowering slide member and that slides in the insertion direction of a cartridge in cooperation with the insertion of the cartridge.

9. The magnetic head lifting and lowering device according to claim 8,
which is able to accept a cartridge that is a read-write cartridge having both a magnetic head opening formed in the magnetic head side and through which the magnetic head passes in order to draw near or come into contact with an information recording medium, and an optical head opening formed in the side opposite the magnetic head and through which passes laser light irradiated onto an information recording medium from an optical head in opposition to the magnetic head and sandwiching an information recording medium between them, or a cartridge that is a read-only cartridge having only the optical head opening;
wherein the cooperative sliding member has a protection member that, when a cartridge is not inserted, is disposed to be removed to the side opposite the fastened portion of the support member with respect to the magnetic head when viewed from the direction perpendicular to the fastening plate;
wherein the cooperative sliding member is slidably provided in the cartridge holder;
wherein the protection member is elastically deformed due to bending, and is urged toward the cartridge holder;
wherein the protection member, when a read-only cartridge is inserted, is moved in the direction of insertion of a read-only cartridge due to sliding of the cooperative sliding member and enters into an opening of the cartridge holder, coming into contact with the magnetic head between a read-only cartridge that has appeared in the opening of the cartridge holder and the magnetic head; and
wherein the protection member, when a read-write cartridge is inserted, is moved in the direction of insertion of a read-write cartridge due to sliding of the cooperative sliding member and retreats into the magnetic head opening of a read-write cartridge that has appeared in the opening of the cartridge holder.

10. The magnetic head lifting and lowering device according to claim 9,
wherein the protection member is made of resin and has a bent portion that is bent toward an information recording medium or a curved portion that is curved toward an information recording medium.

11. The magnetic head lifting and lowering device according to claim 9,
wherein the protection member includes a lubricant layer that comes into contact with the magnetic head when a read-only cartridge is inserted.
